# EUROPÄISCHE PATENTSCHRIFT

(11) **EP 4 127 106 B1**
(45) Veröffentlichungstag und Bekanntmachung des Hinweises auf die Patenterteilung: **22.11.2023**
(21) Anmeldenummer: 21701076.8
(22) Anmeldetag: 15.01.2021
(51) Int. Cl.: C10L 1/14, C10L 10/14, C10L 1/188, C10L 1/19, C10L 1/196, C10L 1/197, C10L 1/198, C10L 1/222, C10L 1/224, C10L 1/236, C10L 1/238, C10L 1/2383

(54) **ZUSAMMENSETZUNGEN UND VERFAHREN ZUR DISPERGIERUNG VON PARAFFINEN IN SCHWEFELARMEN BRENNSTOFFÖLEN**
COMPOSITIONS AND METHODS FOR DISPERSING PARAFFINS IN LOW-SULFUR FUEL OILS
COMPOSITIONS ET PROCÉDÉS DE DISPERSION DES PARAFFINES DANS DES HUILES DE COMBUSTIBLE À FAIBLE TENEUR EN SOUFRE

(30) Priorität: 24.03.2020 EP 20165086
(43) Veröffentlichungstag der Anmeldung: 08.02.2023
(73) Patentinhaber: Clariant International Ltd, 4132 Muttenz (CH)
(72) Erfinder: KRULL, Matthias, 55296 Harxheim (DE); MÜLLER, Kerstin, 55124 Mainz (DE); HACKLÄNDER, Simone, 42699 Solingen (DE); HUBERT, Oliver, 40597 Düsseldorf (DE); BURMISTROV, Sergey, Moscow, 111123 (RU); ABRAMOVA, Lydmila, Perm city, 614065 (RU); UTKIN, Alexander, Krasnogorsk city, 143401 (RU)
(74) Vertreter: Mikulecky, Klaus
(86) Internationale Anmeldenummer: PCT/EP2021/050783
(87) Internationale Veröffentlichungsnummer: WO 2021/190793

(56) Entgegenhaltungen:
- WO-A1-2008/113757
- DE-A1- 2 557 793
- US-B2- 8 287 608

## Beschreibung

Mineralöle und Mineralöldestillate, wie Gasöl, Dieselkraftstoff oder Heizöl, enthalten in der Regel einen Anteil an gelösten n-Paraffinen. Bei tiefen Temperaturen kommt es am Trübungspunkt oder Cloud Point ("CP") zur Ausscheidung fester Paraffine. Bei weiterer Abkühlung bilden die plättchenförmigen n-Paraffinkristalle eine Art "Kartenhausstruktur", die das Mineralöl bzw. Mineralöldestillat zum Stocken bringt, obwohl sein überwiegender Teil noch flüssig ist. Durch die ausgefallenen n-Paraffine im Temperaturbereich zwischen Trübungspunkt (Cloud Point) und Pour Point ("PP") wird die Fließfähigkeit insbesondere von Mitteldestillat-Kraftstoffen erheblich beeinträchtigt; die Paraffine verstopfen Filter und verursachen eine ungleichmäßige oder völlig unterbrochene Kraftstoffzufuhr zu den Verbrennungsaggregaten. Ähnliche Störungen treten bei leichten Heizölen auf.

Im Zuge abnehmender Welterdölreserven und der Diskussion um die die Umwelt beeinträchtigenden Konsequenzen des Verbrauchs fossiler und mineralischer Brennstoffe steigt das Interesse an der Mitverwendung von alternativen, auf nachwachsenden Rohstoffen basierenden Energiequellen (Biokraftstoffe). Neben den klassischen Fettsäureestern als Biodiesel der ersten Generation wurden in den letzten Jahren verschiedene Verfahren zur Herstellung von synthetischen Kraftstoffen entwickelt. Mit diesen können insbesondere aus Abfallfett- und Reststofffraktionen der Lebensmittelindustrie, von Fischereien und Schlachtereien und aus anderen Pflanzenölfraktionen, die nicht für die Lebensmittelindustrie bestimmt sind, praktisch aromatenfreie, paraffinische Kohlenwasserstoffe hergestellt werden. Zu derartigen synthetischen Kraftstoffen zählen beispielsweise hydrierte Pflanzenöle (Hydrotreated Vegetable Oil; HVO), die durch Hydrodeoxygenierung von Pflanzenölen und gegebenenfalls anschließende Isomerisierung der Rohprodukte hergestellt werden können. Ein weiteres Beispiel sind mittels der Fischer-Tropsch-Synthese hergestellte synthetische Kraftstoffe. Die Inhaltsstoffe dieser Biokraftstoffe der zweiten Generation sind herkömmlichen, auf fossilen Rohstoffen basierenden Mitteldestillatbestandteilen sehr ähnlich und können daher in praktisch jedem Mischungsverhältnis auf fossilen Rohstoffen basierende Mitteldestillate - unabhängig von der speziellen Kraftstoffqualität - ersetzen.

Wie bei Brennstoffölen fossilen Ursprungs fallen beim Abkühlen solcher synthetischen Kraftstoffe Paraffinkristalle aus, welche ebenfalls Kraftfahrzeugfilter und Dosiereinrichtungen zusetzen können. Aufgrund ihres hohen Anteils an paraffinischen Bestandteilen besitzen die oben genannten synthetischen Kraftstoffe wie auch ihre Mischungen mit Mitteldestillaten mineralischen oder fossilen Ursprungs in der Regel ein schlechteres Kälteverhalten als Mitteldestillate fossilen Ursprungs alleine. Im Rahmen dieser Erfindung werden Mitteldestillate mineralischen und fossilen Ursprungs, Biokraftstoffe der zweiten Generation sowie deren Mischungen gemeinsam als Brennstofföl bezeichnet.

Außer den klassischen Methoden der Beseitigung der Paraffinprobleme (thermisch, mechanisch oder mit Lösemitteln), die sich lediglich auf die Entfernung der bereits gebildeten Ausfällungen beziehen, wurden eine Reihe von chemischen Additiven (Paraffininhibitoren) entwickelt, die durch physikalisches Zusammenwirken mit den ausfallenden Paraffinkristallen dazu führen, dass deren Form, Größe und Adhäsionseigenschaften modifiziert werden. Als derartige Paraffininhibitoren oder Kaltfließverbesserer bzw. Middle Distillate Flow Improvers ("MDFI") haben sich insbesondere Polymere mit paraffinähnlichen Strukturelementen wie beispielsweise Copolymere des Ethylens mit Vinyl- und/oder Acrylestern und insbesondere Ethylen-Vinylacetat-Copolymere ("EVA") sowie deren Kombination mit Kammpolymeren mit langen Alkylseitenketten bewährt. Diese Additive wirken dabei als zusätzliche Kristallkeime und kristallisieren teilweise mit den Paraffinen aus. Dadurch werden feine, separate Kristalle gebildet, welche auch bei weiterer Absenkung der Temperatur Filter in Kraftfahrzeugen und Heizungsanlagen passieren oder zumindest einen für den flüssigen Teil der Brennstofföle durchlässigen Filterkuchen bilden, so dass ein störungsfreier Betrieb sichergestellt ist. Mit Additiven versetzte Brennstofföle lassen sich noch bei Temperaturen pumpen bzw. verarbeiten, die oft mehr als 20°C tiefer liegen als bei nicht additivierten Ölen. Die Wirksamkeit der Paraffininhibitoren wird üblicherweise nach der europäischen Norm EN 116 indirekt durch Messung des Cold Filter Plugging Point ("CFPP") additivierter Öle ausgedrückt.

Ein Nachteil dieser Kaltfließverbesserer liegt darin, dass die durch sie modifizierten Paraffinkristalle aufgrund ihrer gegenüber dem flüssigen Teil des Brennstofföls höheren Dichte dazu neigen, sich beim Lagern des Kraftstoffs mehr und mehr am Boden des Behälters abzusetzen. Dadurch bildet sich im oberen Behälterteil eine homogene paraffinarme Phase und am Boden eine zweiphasige paraffinreiche Schicht. Da sowohl in den Fahrzeugtanks als auch in Lager- oder Liefertanks der Abzug des Kraftstoffs meist wenig oberhalb des Behälterbodens erfolgt, besteht die Gefahr, dass die hohe Konzentration an festen Paraffinen zu Verstopfungen von Filtern und Dosiereinrichtungen führt. Diese Gefahr wird umso größer, je weiter die Lagertemperatur die Ausscheidungstemperatur der Paraffine unterschreitet, da die ausgeschiedene Paraffinmenge mit sinkender Temperatur zunimmt.

Durch den zusätzlichen Einsatz von Paraffindispergatoren oder Wax Anti-Settling Additiven ("WASA") können die geschilderten Probleme verringert werden. Es sind verschiedene Paraffindispergatoren sowohl monomerer als auch polymerer Struktur bekannt.

Als monomere Paraffindispergatoren sind beispielsweise aus der EP-A-0413279 Umsetzungsprodukte von Alkenylspirobislactonen mit Aminen bekannt.

In der EP-A-0061894 sind ferner öllösliche stickstoffhaltige Verbindungen wie z. B. Umsetzungsprodukte des Phthalsäureanhydrids mit Aminen beschrieben, die in Mischung mit Ethylen-Vinylacetat-Copolymeren eingesetzt werden.

Weiterhin sind aus der EP-A-0597278 Umsetzungsprodukte von Aminoalkylencarbonsäuren mit primären oder sekundären Aminen bekannt.

In EP-A-0436151 sind Erdölmitteldestillate mit verbesserten Kälteeigenschaften beschrieben, die Umsetzungsprodukte von Copolymeren auf Basis von Maleinsäureanhydrid und α,β-ungesättigten Verbindungen mit Dialkylaminen enthalten.

EP-A-0283293 offenbart Copolymere auf der Basis von aliphatischen Olefinen und Maleinsäureanhydrid, wobei das Copolymer sowohl Ester- als auch Amidgruppen aufweisen muss, von denen jede eine Alkylgruppe mit mindestens 10 Kohlenstoffatomen enthält. Weiterhin offenbart sie Copolymere, die durch Umsetzung eines sekundären Amins mit einem Polymer erhalten werden, das Anhydridgruppen enthält, wobei aus den Anhydridgruppen zu gleichen Teilen Amide bzw. Ammoniumsalze entstehen.

EP-A-0606055 offenbart Terpolymere auf der Basis von α,β-ungesättigten Dicarbonsäureanhydriden, α,β-ungesättigten Verbindungen und Polyoxyalkylenethern von niederen, ungesättigten Alkoholen, sowie deren Verwendung als Paraffininhibitoren für paraffinhaltige Erdölprodukte. Ferner sind aus der EP-A-0688796 Copolymere auf der Basis von α,β-ungesättigten Olefinen mit mindestens drei C-Atomen und α,β-ungesättigten Dicarbonsäureanhydriden bekannt, wobei die Dicarbonsäureanhydrideinheiten durch polymeranaloge Umsetzung mit Polyetheraminen oder Alkanolaminen in Imid-, Amid- oder Ammonium-Einheiten überführt sind.

WO 2008/113757 offenbart eine Mischung, enthaltend
(a) 5 bis 95 Gew.-% mindestens einer organischen Verbindung, welche in der Lage ist, das Kaltfliessverhalten von Kraftstoffen zu verbessern, und
(b) 5 bis 95 Gew.-% mindestens eines Amins der allgemeinen Formel I

   R¹R²HN (I)
in der R¹ für einen Hydrocarbylrest mit 6 bis 40 Kohlenstoffatomen, der noch weitere primäre und/oder sekundäre und/oder tertiäre Aminofunktionen enthalten kann, steht und R² einen Hydrocarbylrest mit 6 bis 40 Kohlenstoffatomen oder Wasserstoff bezeichnet, wobei R¹ und R² gemeinsam auch einen 5- bis 7-gliedrigen Ring bilden können, wobei die Summe der Komponenten (a) und (b) 100 Gew.-% ergibt.

DE-2557793 offenbart eine Mitteldestillat-Brennstoffzusammensetzungen mit verbesserten Kaltfließeigenschaften, enthaltend
(1) zwischen ungefähr 0,005 und 0,10 Gew.-% (bezogen auf das Gewicht der gesamten Brennstoffzusammensetzung) eines Dialkyl-substituierten sekundären Amins, bei dem jede Alkylgruppe geradkettig ist und zwischen 8 und 30 Kohlenstoffatome aufweist,
(2) zwischen ungefähr 0,003 und 0,20 Gew.-% eines Fließpunkterniedrigers und
(3) zwischen ungefähr 0,025 und 0,50 Gew.-% einer amorphen Vaseline mit einem Schmelzpunkt im Bereich von ungefähr 25 bis 60°C und einem numerischen mittleren Molekulargewicht im Bereich von etwa 600 bis 1100, die im Wesentlichen frei von normalen Paraffinen ist, worin der Fließpunkterniedriger besteht aus
   (A) einem öllöslichen Äthylen-Copolymeren mit einem numerischen mittleren Molekulargewicht im Bereich von ungefähr 1000 bis 50 000, das ein Copolymeres aus 3 bis 40 molaren Teilen Äthylen und 1 molaren Teil eines Comonomeren,nämlich einem C₃-C₁₆-α-Monoolefin oder einem ungesättigten Ester der folgenden Formel ist: 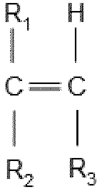 worin
      - R₁: Wasserstoff oder ein Methylrest,
      - R₂: eine Gruppe -OOCR₄ oder -COOR₄, worin R₄ Wasserstoff oder eine Alkylgruppe mit 1 bis 16 Kohlenstoffatomen und R₃ Wasserstoff oder den Rest -COOR₄ bedeuten; oder
   (B) chloriertem Polyäthylen mit einem numerischen mittleren Molekulargewicht von 1000 bis 20 000 und einem Chlorgehalt von 4 bis 35 Gew.-%; oder
   (C) einem Kohlenwasserstoff-substituierten Succinaminsäure-Derivat der Formel: 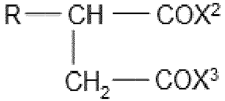 worin
      R ein geradkettiger aliphatischer Kohlenwasserstoffrest mit 0 oder 1 olefinischen Unsättigung und 14 bis 40 Kohlenstoffatomen, der an einem sekundären Kohlenstoffatom an die Succinylgruppe gebunden ist, bedeutet, einer der beiden Reste X² oder X³ -NYY¹ , worin YY¹ aliphatische Kohlenwasserstoffgruppen mit 14 bis 40 Kohlenstoffatomen und der andere der Reste X² oder X³ ein Rest der Formel:

         -OH(NHY²Y³)n
      bedeuten, worin
      n 0 oder 1, Y² und Y³ Wasserstoff oder aliphatische oder oxyaliphatische Kohlenwasserstoffe mit 1 bis 30 Kohlenstoffatomen oder zusammen mit dem Stickstoff, an dem sie gebunden sind, einen heterocyclischen Ring mit 5 bis 7 Gliedern bedeuten, oder
   (D) einem hydrierten Copolymeren aus Butadien und Styrol.

US-8287608 lehrt eine Zusammensetzung, die eine Mischung aus mindestens einem Amin mit mindestens einer alicyclischen Gruppe und mindestens einer Monocarbonsäure oder Fettsäure mit zwischen acht und 22 Kohlenstoffatomen enthält. Die Zusammensetzung betrifft das technische Problem, dass im Handel erhältliche Fettsäuren und Fettsäuremischungen dazu neigen, bei bei Winterwetter üblichen Temperaturen einzufrieren oder Kristalle zu bilden. Das Einfrieren oder die Bildung von Kristallen erschwert die Handhabung der Additive und insbesondere das Einspritzen in Kraftstoff. Es besteht daher ein Bedarf an einer Verbesserung der Schmiermitteladditive, um zu einer Absenkung des Trübungspunkts der Schmiermitteladditive selbst zu führen, ohne schädliche Auswirkungen auf andere gewünschte Eigenschaften zu haben.

Im Zuge der immer anspruchsvoller werdenden Anforderungen an die Umweltverträglichkeit von Brennstoffölen und ihrer Verbrennungsprodukte wurde der Schwefelgehalt von Mitteldestillaten seit den 1990er Jahren schrittweise abgesenkt und ist derzeit in den meisten Regionen auf maximal 10 ppm begrenzt. In den zur Entschwefelung von Brennstoffölen fossilen Ursprungs angewandten Raffinerieprozessen wird neben den unerwünschten Schwefelverbindungen aber auch der Gehalt an weiteren Komponenten wie beispielsweise polyzyklischen Aromaten und anderen polaren Verbindungen abgesenkt, die für eine Schmierung von Motorenteilen wie beispielsweise der Einspritzpumpe erforderlich sind. Folglich muss schwefelarmen Kraftstoffen zur Sicherstellung einer ausreichenden Schmierfähigkeit ein sogenanntes Lubricity-Additiv zugesetzt werden. Dabei handelt es sich üblicherweise um Fettsäuren, deren Ester wie beispielsweise Polyolpartialester und/oder Amide wie beispielsweise Alkanolamide. Da die Biokraftstoffe der zweiten Generation synthesebedingt praktisch keine zur Schmierung befähigten polaren Komponenten enthalten, ist in Brennstoffölen, die einen Biokraftstoff der zweiten Generation enthalten oder aus ihm bestehen, der Bedarf an Lubricity Additiven besonders hoch.

Oftmals führt jedoch der Zusatz eines Lubricity-Additivs zum Brennstofföl zu einer Beeinträchtigung der Wirksamkeit von Paraffindispergatoren, die als Wirkstoff ein Amid-Ammoniumsalz einer Polycarbonsäure enthalten. Dies äußert sich beispielsweise darin, dass die mit solchen Paraffindispergatoren eingestellten Kälteeigenschaften durch das Lubricity-Additiv verschlechtert oder die mit dem Paraffindispergator einstellbaren Kälteeigenschaften nicht erreicht werden. Dieser Antagonismus ist insbesondere zu beobachten, wenn die Paraffindispergierung unter sehr kritischen Bedingungen, wie zum Beispiel bei Lagerung des Brennstofföls bei Temperaturen von nicht nur wie üblich 5 K sondern 10 K und mehr wie beispielsweise 15 K unterhalb des Cloud Points des Brennstofföls und/oder über längere Zeiträume von mehreren Tagen bis Wochen sichergestellt werden soll. Durch Erhöhung der Dosierrate des Paraffindispergators kann dieser antagonistische Effekt in der Regel nicht oder nur teilweise überwunden werden.

Aufgabe vorliegender Erfindung war es somit, einen gegenüber dem Stand der Technik verbesserten Paraffindispergator bereit zu stellen, dessen Wirksamkeit durch den Zusatz eines Lubricity-Additivs, das ausgewählt ist aus Fettsäuren, Fettsäurepartialestern von Polyolen und und/oder Fettsäureamiden von Alkanolamiden, zu dem den Paraffindispergator enthaltenden Brennstofföl nicht beeinträchtigt wird.

Eine weitere Aufgabe der Erfindung war es, das Ansprechverhalten von Paraffindispergatoren in solchen schwefelarmen Brennstoffölen zu verbessern, die ein Lubricity-Additiv enthalten, das ausgewählt ist aus Fettsäuren, Fettsäurepartialestern von Polyolen und und/oder Fettsäureamiden von Alkanolamiden. Unter der Verbesserung des Ansprechverhaltens wird dabei verstanden, dass die mit einer gegebenen Dosierrate des Paraffindispergators erzielbare Verbesserung der Kälteeigenschaften in Abwesenheit wie auch in Gegenwart eines Lubricity-Additivs im Brennstofföl vergleichbar oder auch verbessert ist. Unter vergleichbarer Wirksamkeit wird verstanden, dass die Kälteeigenschaften in ihrer Gesamtheit den Werten ohne die Zugabe von Lubricity-Additiv möglichst nahekommen.

Ein weiterer Gegenstand der Erfindung war die Bereitstellung eines Brennstofföls, das durch Zugabe eines Paraffindispergators und eines aus Fettsäuren, Fettsäurepartialestern von Polyolen und und/oder Fettsäureamiden von Alkanolamiden ausgewählten Lubricity-Additivs die gleichen oder zumindest vergleichbare Kälteeigenschaften aufweist wie das gleiche Brennstofföl nach Zugabe des Paraffindispergators alleine.

Überraschenderweise wurde nun gefunden, dass die Wirksamkeit eines Paraffindispergators, der neben dem öllöslichen Amid-Ammoniumsalz einer Polycarbonsäure ein öllösliches Amin enthält, durch die Zugabe eines Lubricity-Additivs zu dem den Paraffindispergator und das öllösliche Amin enthaltenden Brennstofföl nicht beeinträchtigt wird. Des Gleichen lässt sich das durch die Anwesenheit eines Lubricity-Additivs im Brennstofföl beeinträchtigte Ansprechverhalten eines Paraffindispergators, der ein Amid-Ammoniumsalz einer Polycarbonsäure enthält, durch Zugabe eines öllöslichen Amins zum Paraffindispergator verbessern. Des Weiteren kann der antagonistische Effekt eines Lubricity-Additivs auf die Wirksamkeit bzw. das Ansprechverhalten eines Paraffindispergators, der ein Amid-Ammoniumsalz einer Polycarbonsäure enthält unterdrückt werden, indem dem Brennstofföl ein öllösliches Amin zugesetzt wird.

Offenbart wird als erster Gegenstand somit ein Kälteadditiv für Brennstofföle mit einem Schwefelgehalt von weniger als 50 ppm, enthaltend mindestens ein öllösliches Amid-Ammoniumsalz einer Polycarbonsäure mit einem
i) Mono- und/oder Dialkylamin (A) und
ii) 5 - 100 Gew.-% bezogen auf die Menge an Amid-Ammoniumsalz (A) eines öllöslichen Amins (B), und
iii) 0,1 bis 10 Gewichtsteile bezogen auf die Menge an Amid-Ammoniumsalz (A) eines Harzes aus mindestens einer einen Alkylrest tragenden aromatischen Verbindung und einem Aldehyd und/oder Keton (D).

Ein zweiter Gegenstand der Erfindung ist die Verwendung eines Kälteadditivs gemäß erstem Gegenstand zur Verbesserung der Kälteeigenschaften eines Brennstofföls mit einem Schwefelgehalt von weniger als 50 ppm, das ein Lubricity-Additiv (C) enthält, wobei das Lubricity-Additiv (C) eine Fettsäure, das Oligomere einer ungesättigten Fettsäure, eine Alk(en)ylbernsteinsäure, einen Partialester eines Polyols mit einer Fettsäure, einen Partialester eines Polyols mit einem Oligomeren einer ungesättigten Fettsäure, einen Partialester eines Polyols mit einer Alk(en)ylbernsteinsäure, ein Fettsäureamid eines Alkanolamins oder eine Mischung aus zwei oder mehreren dieser Verbindungen enthält.

Ein dritter Gegenstand der Erfindung ist die Verwendung von 5 - 100 Gew.-%, bezogen auf die Menge an Amid-Ammoniumsalz (A), eines öllöslichen Amins (B) zur Verbesserung der Kälteeigenschaften eines Brennstofföls mit einem Schwefelgehalt von weniger als 50 ppm, das
i) mindestens ein öllösliches Amid-Ammoniumsalz einer Polycarbonsäure mit einem Mono- und/oder Dialkylamin (A) und
ii) ein Lubricity-Additiv (C), und
ii) 0,1 bis 10 Gewichtsteile bezogen auf die Menge an Amid-Ammoniumsalz (A) eines Harzes aus mindestens einer einen Alkylrest tragenden aromatischen Verbindung und einem Aldehyd und/oder Keton (D) enthält, worin das Lubricity-Additiv (C) ausgewählt ist aus Fettsäuren, Oligomeren ungesättigter Fettsäuren, Alk(en)ylbernsteinsäuren, Partialestern von Polyolen mit Fettsäuren, Oligomeren ungesättigter Fettsäuren und/oder Alk(en)ylbernsteinsäuren, Fettsäureamiden von Alkanolaminen sowie deren Mischungen.

Offenbart wird als vierter Gegenstand ein Verfahren zur Verbesserung des Ansprechverhaltens eines Brennstofföls mit einem Schwefelgehalt von weniger als 50 ppm auf die Zugabe eines Amid-Ammoniumsalzes (A) als Kälteadditiv, wobei das Brennstofföl ein Lubricity-Additiv (C) und ein Harz aus mindestens einem Alkylrest tragenden aromatischen Verbindungen und Aldehyden und/oder Ketonen (D) enthält,, dadurch gekennzeichnet, dass dem Brennstofföl bezogen auf das Amid-Ammoniumsalz (A) 5 bis 100 Gew.% eines öllöslichen Amins (B) zugesetzt werden.

Ein fünfter Gegenstand der Erfindung sind Brennstofföle mit einem Schwefelgehalt von weniger als 50 ppm, enthaltend
i) mindestens ein öllösliches Amid-Ammoniumsalz einer Polycarbonsäure mit einem Mono- und/oder Dialkylamin (A),
ii) 5 - 100 Gew.-% bezogen auf die Menge an Amid-Ammoniumsalz (A) eines öllöslichen Amins (B) und
ii) ein Lubricity-Additiv (C), und
iv) 0,1 bis 10 Gewichtsteile bezogen auf die Menge an Amid-Ammoniumsalz (A) eines Harzes aus mindestens einer einen Alkylrest tragenden aromatischen

Verbindung und einem Aldehyd und/oder Keton (D), und worin das Lubricity-Additiv (C) ausgewählt ist aus Fettsäuren, Oligomeren ungesättigter Fettsäuren, Alk(en)ylbernsteinsäuren, Partialestern von Polyolen mit Fettsäuren, Oligomeren ungesättigter Fettsäuren und/oder Alk(en)ylbernsteinsäuren, Fettsäureamiden von Alkanolaminen sowie deren Mischungen.

Die Kombination aus (A), (B) und (D) wird im Folgenden auch als "erfindungsgemäßes Additiv" oder "erfindungsgemäßes Kälteadditiv" bezeichnet. Das öllösliche Amid-Ammoniumsalz einer Polycarbonsäure mit einem Mono- und/oder Dialkylamin (A) wird im Rahmen dieser Erfindung auch als Amid-Ammoniumsalz (A) bezeichnet.

Unter der Verbesserung des Ansprechverhaltens von Kälteadditiven wird erfindungsgemäß verstanden, dass mindestens eine durch das Amid-Ammoniumsalz (A) eingestellte bzw. einstellbare und durch die Zugabe eines Lubricity-Additivs (C) beeinträchtigte Kälteeigenschaft eines Brennstofföls durch Zugabe eines öllöslichen Amins (B) verbessert bzw. wiederhergestellt wird. Speziell wird durch die Zugabe des öllöslichen Amins (B) die in Abwesenheit des Lubricity-Additivs C) durch das Amid-Ammoniumsalz (A) eingestellte oder einstellbare Kälteeigenschaft erreicht. Unter Kälteeigenschaften werden dabei einzeln oder in Kombination der Trübungspunkt (Cloud Point), die Kaltfiltrierbarkeit (Cold Filter Plugging Point, CFPP), die Paraffindispergierung sowie der Pour Point (PP) von Brennstoffölen verstanden.

Besonders beeinträchtigt ist das Ansprechverhalten von Amid-Ammoniumsalze (A) enthaltenden Kälteadditiven in Brennstoffölen, die mehr als 10 ppm Lubricity-Additiv (C) und insbesondere mehr als 50 ppm und speziell mehr als 100 ppm Lubricity-Additiv (C) enthalten.

### AMID-AMMONIUMSALZ (A)

Das öllösliche Amid-Ammoniumsalz (A) ist das Umsetzungsprodukt einer Polycarbonsäure mit einem Mono- und/oder Dialkylamin. Bevorzugt ist die Polycarbonsäure ausgewählt aus monomeren Dicarbonsäuren, monomeren Polycarbonsäuren und copolymerisierten Dicarbonsäuren. Bevorzugte Polycarbonsäuren haben 2 oder mehr wie beispielsweise 3, 4 oder mehr Carboxylgruppen; im Falle von copolymerisierten Dicarbonsäuren enthält das Polymermolekül eine dem doppelten Polymerisationsgrad entsprechende Anzahl an Carboxylgruppen. Die Polycarbonsäure kann auch Heteroatome wie Sauerstoff, Schwefel und/oder Stickstoff enthalten. Bevorzugte Polycarbonsäuren haben inklusive der Carboxylgruppen 3 bis 20 C-Atome und bevorzugt 4 bis 10 C-Atome wie beispielsweise 3 bis 10 oder 4 bis 20 C-Atome. Das die Carboxylgruppen tragende Kohlenstoffgerüst kann aliphatisch oder aromatisch sein. Es kann von Heteroatomen wie beispielsweise N, O und S unterbrochen sein.

Beispiele für monomere Dicarbonsäuren sind Maleinsäure, Fumarsäure, Crotonsäure, Itaconsäure, Bernsteinsäure, C₁-C₄₀-Alkenylbernsteinsäure, Adipinsäure, Glutarsäure, Pimelinsäure, Sebacinsäure und Malonsäure sowie Phthalsäure, Isophthalsäure und Terephthalsäure. Beispiele für monomere Polycarbonsäuren sind Trimellitsäure, Pyromellitsäure, Nitrilotriessigsäure, Ethylendiamintetraessigsäure, Methylglycindiessigsäure, Glutaminsäure-N,N,-diessigsäure und deren Mischungen. Besonders bevorzugte Monomere Polycarbonsäuren sind Maleinsäure, Phthalsäure, Nitrilotriessigsäure und Ethylendiamintetraessigsäure.

Beispiele für copolymerisierte Dicarbonsäuren sind Copolymere ethylenisch ungesättigter Dicarbonsäuren wie beispielsweise der Maleinsäure, der Fumarsäure und der Itaconsäure. Besonders bevorzugt sind Copolymere des Maleinsäureanhydrids. Als Comonomere sind solche bevorzugt, die dem Copolymer Öllöslichkeit verleihen. Unter öllöslich wird hier verstanden, dass sich das Copolymer nach Umsetzung mit dem Mono- und/oder Dialklylamin in praxisrelevanten Dosierraten rückstandsfrei im zu additivierenden Brennstofföl löst. Besonders geeignete Comonomere sind beispielsweise Olefine, Alkylester der Acrylsäure und Methacrylsäure, Alkylvinylester und Alkylvinylether. Bevorzugte Olefine sind α-Olefine und Styrol. Besonders bevorzugt sind Comonomere, die Alkylreste mit 2 bis 40, bevorzugt mit 6 bis 24, insbesondere mit 8 bis 20 C-Atomen und speziell mit 10 bis 16 C-Atomen besitzen wie beispielsweise Comonomere mit 2 bis 24, mit 2 bis 20, mit 2 bis 16, mit 6 bis 40, mit 6 bis 20, mit 6 bis 16, mit 8 bis 40, mit 8 bis 24, mit 8 bis 20 mit 10 bis 40, mit 10 bis 24 oder mit 10 bis 20 C-Atomen im Alkylrest. Die Alkylreste können linear oder verzweigt sein; bevorzugt sind sie linear. Bei Olefinen bezieht sich die Kohlenstoffzahl auf den an die Doppelbindung gebundenen Alkylrest. Bevorzugte α-Olefine sind Dodecen, Tetradecen, Hexadecen, Octadecen und deren Mischungen. Die Copolymere können statische Copolymere, Blockcopolymere wie auch alternierende Polymere sein. Auf Grund der Polymerisationseigenschaften von Maleinsäureanhydrid sind dessen alternierende Co- und Terpolymere bevorzugt. Beispiele für geeignete Co- und Terpolymere sind Poly(Maleinsäureanhydrid-co-α-Olefin), Poly(Maleinsäureanhydrid-co-Stryol), Poly(Maleinsäureanhydrid-co-Alkylacrylat) und Poly(Maleinsäureanhydrid-co-α-Olefin-co-Alkylacrylat). Die gewichtsmittleren Molekulargewichte der polymeren Copolymere liegen bevorzugt zwischen 400 und 20.000, besonders bevorzugt zwischen 500 und 10.000 wie beispielsweise zwischen 1.000 und 5.000 g/mol (gemäß GPC in THF gegen Poly(styrol)-Standards).

Die Herstellung von Amid-Ammoniumsalzen (A) kann durch Umsetzung der Polycarbonsäure mit einem Mono- und/oder Dialkylamin erfolgen. Oftmals hat es sich bewährt, von einem reaktiven Derivat der Polycarbonsäure wie beispielsweise von einem Ester, Anhydrid oder Säurehalogenid auszugehen. Besonders bevorzugt sind dabei die Säureanhydride.

Bei den für die Herstellung der Amid-Ammoniumsalze (A) aus Polycarbonsäuren oder deren reaktiven Derivaten bevorzugten Mono- und/oder Dialkylaminen handelt es sich um Verbindungen der Formel NR¹R²R³, worin R¹, R² und R³ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln (A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂-Cycloalkyl oder C₆-C₃₀-Aryl, und n = 2, 3 oder 4 bedeuten, und Y und Z unabhängig voneinander H, C₁-C₃₀-Alkyl oder-(A-O)ₓ bedeuten. Auch Polyamine der Formel -[N-(CH₂)ₙ]ₘ-NR¹R², in der m für eine Zahl zwischen 1 und 20 steht und n, R¹ und R² die oben gegebenen Bedeutungen haben, sind als Mono- und/oder Dialkylamine geeignet. Die Alkyl- und Alkenylreste können linear oder verzweigt sein und bis zu zwei Doppelbindungen enthalten. Bevorzugt sind sie linear und weitgehend gesättigt, das heißt sie haben Jodzahlen von weniger als 75 g I₂/100 g, bevorzugt weniger als 60 g I₂/100 g und insbesondere zwischen 1 und 10 g I₂/100 g. Besonders bevorzugt sind sekundäre Amine, in denen zwei der Gruppen R¹, R² und R³ für C₈-C₃₆-Alkyl, C₆-C₃₆-Cycloalkyl, C₈-C₃₆-Alkenyl, insbesondere für C₁₂-C₂₄-Alkyl, C₁₂-C₂₄-Alkenyl oder Cyclohexyl stehen. Geeignete Monoalkylamine sind beispielsweise Octylamin, Decylamin, Dodecylamin, Tetradecylamin, Hexadecylamin, Octadecylamin, Eicosylamin, Behenylamin; bevorzugte Dialkylamine sind beispielsweise Didecylamin, Didodecylamin, Ditetradecylamin, Dihexadecylamin, Dioctadecylamin, Dieicosylamin, Dibehenylamin sowie deren Mischungen. Speziell enthalten die Mono- und Dialkylamine Kettenschnitte auf Basis natürlicher Rohstoffe wie z.B. Cocosfettamin, Talgfettamin, hydriertes Talgfettamin, Dicocosfettamin, Ditalgfettamin und Di(hydriertes Talgfettamin). Besonders bevorzugte Aminderivate sind Aminsalze, Imide und/oder Amide wie beispielsweise Amid-Ammoniumsalze sekundärer Fettamine, insbesondere von Dicocosfettamin, Ditalgfettamin und Distearylamin.

Besonders bewährt als Amid-Ammoniumsalze (A) haben sich öllösliche polare Stickstoffverbindungen, die durch Reaktion aliphatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Desgleichen sind Amide und Ammoniumsalze von Aminoalkylenpolycarbonsäuren wie Nitrilotriessigsäure oder Ethylendiamintetraessigsäure mit sekundären Aminen als öllösliche polare Stickstoffverbindungen geeignet (vgl. EP 0 398 101). Andere öllösliche polare Stickstoffverbindungen sind Copolymere des Maleinsäureanhydrids mit α,β-ungesättigten Verbindungen, die gegebenenfalls mit primären Monoalkylaminen und/oder aliphatischen Alkoholen umgesetzt werden können (vgl. EP-A-0 154 177, EP-0 777 712), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxyalkylenethern niederer ungesättigter Alkohole.

Zur Verbesserung der Kälteeigenschaften wird das Amid-Ammoniumsalz (A) dem zu behandelnden schwefelarmen Brennstofföl bevorzugt in Mengen von 1 bis 100 ppm, besonders bevorzugt in Mengen von 5 bis 75 ppm und speziell in Mengen von 10 bis 50 ppm, wie beispielsweise in Mengen von 1 bis 75 ppm, in Mengen von 1 bis 50 ppm, in Mengen von 5 bis 100 ppm, in Mengen von 5 bis 50 ppm, in Mengen von 10 bis 100 ppm oder in Mengen von 10 bis 75 ppm (jeweils m/m) zugesetzt.

### ÖLLÖSLICHES AMIN (B)

Als öllösliches Amin (B) sind erfindungsgemäß solche Amine bevorzugt, die einen Siedepunkt oberhalb des Siedebeginns des zu additivierenden schwefelarmen Brennstofföls besitzen. Unter Siedepunkt wird der Siedepunkt bei Normaldruck verstanden. Das Siedeverhalten von Mitteldestillaten kann beispielsweise mittels Siedeanalyse gemäß DIN EN ISO 3405 bestimmt werden. Besonders bevorzugt sind Amine mit einem Siedepunkt von mindestens 110°C, speziell solche mit einem Siedepunkt von mindestens 150°C wie beispielsweise mindestens 175°C. Dies verhindert, dass das Amin während Transport und/oder Lagerung des behandelten schwefelarmen Brennstofföls aus diesem entweicht.

Bevorzugte öllösliche Amine (B) haben die Formel (1) 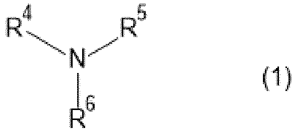 worin
- R⁴: für einen Alkylrest mit 8 bis 22 C-Atomen oder eine Gruppe der Formel -(CH₂)ₚ-[NR⁷-(CH₂)ₚ]ₘ-NH₂,
- R⁵: für Wasserstoff oder einen Alkylrest mit 1 bis 22 C-Atomen oder eine Gruppe der Formel -(CH₂)ₚ-[NR⁷-(CH₂)ₚ]ₘ-NH₂,
- R⁶: für Wasserstoff oder einen Alkylrest mit 1 bis 22 C-Atomen
- R⁷: für H oder Alkylrest mit 1 bis 22 C-Atomen
- p: für 2 oder 3 und
- m: für 0 oder eine ganze Zahl von 1 bis 10 steht.

In einer ersten bevorzugten Ausführungsform handelt es sich bei dem öllöslichen Amin (B) um ein Fettamin (Bi), das mindestens einen Alkylrest mit mindestens 8 C-Atomen, bevorzugt mit 12 bis 22 und insbesondere mit 14 bis 20 C-Atomen wie beispielsweise mit 8 bis 22 C-Atomen, mit 8 bis 22 C-Atomen, mit 12 bis 20 C-Atomen oder 14 bis 22 C-Atomen trägt. Bevorzugte Fettamine (Bi) haben die Formel (1), worin
- R⁴: für einen Alkylrest mit 8 bis 22 C-Atomen,
- R⁵: für Wasserstoff einen Alkylrest mit 1 bis 22 C-Atomen und
- R⁶: für Wasserstoff oder einen Alkylrest mit 1 bis 22 C-Atomen steht.

Geeignete Fettamine (Bi) umfassen primäre, sekundäre und/oder tertiäre Amine und deren Mischungen.

Das Fettamin (Bi) ist in einer ersten bevorzugten Ausführungsform ein primäres Amin, bei dem R⁴ für einen Alkylrest mit 8 bis 22 C-Atomen und R⁵ und R⁶ für Wasserstoff stehen. In einer besonders bevorzugten Ausführungsform handelt es sich bei dem Fettamin (Bi) um eine Mischung aus verschiedenen primären Aminen.

Das Fettamin (Bi) ist einer zweiten bevorzugten Ausführungsform ein sekundäres Amin, bei dem R⁴ für einen Alkylrest mit 10 bis 22 C-Atomen, R⁵ für einen Alkylrest mit 1 bis 22 C-Atomen und R⁶ für Wasserstoff stehen. Bei besonders bevorzugten sekundären Aminen steht R⁵ für einen Alkylrest mit 10 bis 22 C-Atomen. In einer speziell bevorzugten Ausführungsform umfassen R⁴ und R⁵ eine Mischung verschiedener Kettenlängen. In einer weiteren speziell bevorzugten Ausführungsform handelt es sich bei dem Fettamin (Bi) um eine Mischung verschiedener sekundärer Amine der Formel (1).

Das Fettamin (Bi) ist in einer dritten bevorzugten Ausführungsform ein tertiäres Amin, bei dem R⁴ für einen Alkylrest mit 10 bis 22 C-Atomen und R⁵ und R⁶ unabhängig voneinander für einen Alkylrest mit 1 bis 22 C-Atomen stehen. Bei besonders bevorzugten tertiären Amin der Formel (1) stehen R⁴ und R⁵ unabhängig voneinander für einen Alkylrest mit 10 bis 22 C-Atomen und R⁶ für einen Alkylrest mit 1 bis 6 C-Atomen. In einer speziell bevorzugten Ausführungsform umfassen R⁴, R⁵ und R⁶ unabhängig voneinander eine Mischung verschiedener Kettenlängen. In einer weiteren speziell bevorzugten Ausführungsform handelt es sich bei dem Fettamin (Bi) um eine Mischung verschiedener tertiärer Amine der Formel (1).

Die Alkylreste R⁴, R⁵ und R⁶ können unabhängig voneinander linear oder verzweigt sein; sofern sie mindestens 5 C-Atome haben können sie auch zyklisch sein oder zyklische Strukturelemente enthalten. Bevorzugt sind sie linear. Weiterhin können die Akylreste R⁴, R⁵ und R⁶ unabhängig voneinander gesättigt oder ungesättigt sein. Besonders bevorzugt sind sie gesättigt oder zumindest im Wesentlichen gesättigt. im Wesentlichen gesättigt bedeutet, dass die sie enthaltenden Amine eine Jodzahl nach Wijs von maximal 20 gJ₂/100g, besonders bevorzugt von maximal 10 gJ₂/100g und speziell von maximal 5 gJ₂/100g haben.

Beispiele für bevorzugte Alkylreste R⁴, R⁵ und R⁶ mit 10 bis 20 C-Atomen sind Decyl-, Undecyl-, Dodecyl-, Tridecyl-, Tetradecyl-, Hexadecyl-, Octadecyl-, Oleyl- und Eicosylreste sowie deren Mischungen. Sofern R⁴, R⁵ und R⁶ Mischungen verschiedener Alkylreste enthalten, sind die einzelnen Kettenlängen bevorzugt mit jeweils 1 bis 99 Gew.-% und besonders bevorzugt mit 5 bis 95 Gew.-% in den Mischungen enthalten. Besonders bevorzugt sind Mischungen von Alkylresten, die aus nachwachsenden Rohstoffen erhalten werden wie beispielsweise Cocosfettalkyl-, Talgfettalkyl- und Behenylreste. Beispiele für bevorzugte Alkylreste R⁵ und R⁶ mit 1 bis 9 C-Atomen sind Methyl-, Ethyl, Propyl-, Butyl-, Pentyl-, Hexyl-, Heptyl-, Octyl- und Nonylreste sowie deren Mischungen. Besonders bevorzugt als Alkylrest R⁵ und R⁶ mit 1- 9 C-Atomen ist der Methylrest.

Beispiele für erfindungsgemäß bevorzugte primäre Fettamine (Bi) sind Decylamin, Dodecylamin, Tridecylamin, Tetradecylamin, Hexadecylamin, Octadecylamin und Eicosylamin sowie deren Mischungen. Besonders bevorzugt sind Amine, die aus Kettenschnitten nachwachsender Rohstoffe gewonnen werden wie beispielsweise Cocosfettamin, Talgfettamin, hydriertes Talgfettamin und Behenylamin.

Beispiele für erfindungsgemäß bevorzugte sekundäre Fettamine (Bi) sind Di(decyl)amin, Didodecylamin, Ditridecylamin, Ditetradecylamin, Dihexadecylamin, Dioctadecylamin, Dieicosylamin, Dodecyltetradecylamin, Dodecylhexadecylamin, Dodecylhexadecylamin, Tetradecylhexadecylamin, Tetradecylhexadecylamin, Hexadecyloctadecylamin sowie deren Mischungen. Besonders bevorzugt sind Amine, die aus Kettenschnitten nachwachsender Rohstoffe gewonnen werden wie beispielsweise Dicocosfettamin, Ditalgfettamin, Di(hydriertes Talgfettamin) und Behenylamin.

Beispiele für erfindungsgemäß bevorzugte tertiäre Fettamine (Bi) sind N-Methyldidecylamin, N-Methyldidodecylamin, N-Methylditridecylamin, N-Methylditetradecylamin, N-Methyldihexadecylamin, N-Methyldioctadecylamin, N-Methyldieicosylamin, N-Methyl-N-dodecyltetradecylamin, N-Methyl-N-dodecylhexadecylamin, N-Methyl-N-tetradecylhexadecylamin, N-Methyl-N-hexadecyloctadecylamin sowie deren Mischungen. Besonders bevorzugt sind Fettamine (Bi), die aus Kettenschnitten nachwachsender Rohstoffe gewonnen werden wie beispielsweise N-Methyldicocosfettamin, N-Methylditalgfettamin, N-Methyl-di(hydriertes Talgfettamin) und N-Methyldibehenylamin.

Bei Fettaminen (Bi), in denen die Reste R⁴, R⁵ und/oder R⁶ unterschiedliche Bedeutungen haben wie auch bei Mischungen von Fettaminen (Bi) liegt die mittlere Alkylkettenlänge (molar) der Reste R⁴, R⁵ und R⁶, sofern diese nicht für Wasserstoff stehen, bevorzugt im Bereich von 10 bis 18 und insbesondere im Bereich von 12 bis 17,5 wie beispielsweise im Bereich von 10 bis 17,5 oder von 12 bis 18. Erfindungsgemäß besonders bevorzugte Fettamine sind Dicocosfettamin, Di(hydriertes Talgfett)amin, Distearylamin und deren Mischungen.

In einer zweiten bevorzugten Ausführungsform handelt es sich bei dem öllöslichen Amin (B) um ein Polyamin (Bii), das mindestens eine Gruppe der Formel -(CH₂)ₚ-[NR⁷-(CH₂)ₚ]ₘ-NH₂ trägt, worin R⁷ für H oder einen Alkylrest mit 1 bis 22 C-Atomen, p für 2 oder 3 und m für 0 oder eine ganze Zahl von 1 bis 10 steht. Bevorzugt steht R⁷ für H. Polyamine (Bii) besitzen folglich mindestens zwei über einen Alkylenrest mit zwei oder drei C-Atomen verbundene Stickstoffatome. Besonders bevorzugte Polyamine enthalten 2 bis 10 wie beispielsweise zwei, drei oder vier Stickstoffatome. Beispiele für bevorzugte Polyamine sind Ethylendiamin, Propylendiamin, Diethylentriamin, Dipropylentriamin, Triethylentetraamin, Tetraethylenpentamin, Laurylpropylendiamin, Talgfettpropylendiamin, Lauryldipropylentriamin, Talgfettdipropylentriamin und Oleyltripropylentetramin.

Das öllösliche Amin (B) ist im Additiv wie auch in dem mit ihm additivierten schwefelarmen Brennstofföl mit 5 - 100 Gew.-% bezogen auf die Menge an Amid-Ammoniumsalz (A) enthalten. Bevorzugt enthält das Additiv 10 bis 100 Gew.-%, besonders bevorzugt 15 bis 70 Gew.-% und speziell 20 bis 50 Gew.-% wie beispielsweise 5 bis 100 Gew.-%, 5 bis 70 Gew-%, 5 bis 50 Gew.-%, 10 bis 100 Gew.-%, 10 bis 70 Gew.-%, 10 bis 50 Gew.-%, 15 bis 100 Gew.-%, 15 bis 100 Gew.-%, 15 bis 50 Gew.-%, 20 bis 100 Gew.-%, 20 bis 100 Gew.-% oder 30 bis 70 Gew.-% öllösliches Amin (B) bezogen auf die Menge an Amid-Ammoniumsalz (A).

Bei der Verwendung des öllöslichen Amins (B) zur Verbesserung der Kälteeigenschaften eines schwefelarmen Brennstofföls gemäß drittem Gegenstand der Erfindung wie auch zur Verbesserung des Ansprechverhaltens eines Lubricity-Additiv (C) enthaltenden schwefelarmen Brennstofföls auf die Zugabe von Amid-Ammoniumsalz (A) werden dem schwefelarmen Brennstofföl 5 - 100 Gew.-%, bevorzugt 10 bis 75 Gew.-%, besonders bevorzugt 15 bis 70 Gew.-% und speziell 20 bis 65 Gew.-% wie beispielsweise 5 bis 75 Gew.-%, 5 bis 70 Gew-%, 5 bis 65 Gew.-%, 10 bis 100 Gew.-%, 10 bis 70 Gew.-%, 10 bis 65 Gew.-%, 15 bis 100 Gew.-%, 15 bis 75 Gew.-%, 15 bis 65 Gew.-%, 20 bis 100 Gew.-%, 20 bis 75 Gew.-% oder 30 bis 70 Gew.-% öllösliches Amin (B) bezogen auf die im Brennstofföle enthaltene bzw. diesem zuzusetzende Menge an Amid-Ammoniumsalz (A) zugesetzt.

Gemäß drittem Gegenstand der Erfindung wird das öllösliche Amin (B) zu einem schwefelarmen Brennstofföl gegeben, dass ein Amid-Ammoniumsalz (A) und ein Lubricity-Additiv (C) enthält. Es führt dabei zu einer Verbesserung der Kälteeigenschaften wie beispielsweise einer weiteren Absenkung des CFPP-Werts und/oder einer Verbesserung der Paraffindispergierung.

Alternativ kann das öllösliche Amin (B) gemäß viertem Gegenstand der Erfindung auch dem schwefelarmen Brennstofföl vor seiner Additivierung mit Amid-Ammoniumsalz (A) und Lubricity-Additiv (C) zugesetzt werden, so dass das Auftreten des antagonistischen Effekts bei der nachfolgenden Additivierung mit Amid-Ammoniumsalz (A) und Lubricity-Additiv (C) verhindert wird.

### LUBRICITY-ADDITIV (C)

Lubricity-Additive sind Ölzusätze, die die Schmierfähigkeit schwefelarmer Brennstofföle verbessern. Bevorzugt bewirken sie in der eingesetzten Dosierung im Brennstofföl eine Verringerung des Reibverschleißwerts (R; in µm) nach dem HFRR-Test gegenüber dem gleichen Kraftstoff ohne Zusatz von Lubricity-Additiv um mindestens 10 %, besonders bevorzugt um mindestens 20 % und speziell um mindestens 25%. Der Reibverschleißwert kann beispielsweise mittels des HFRR-Tests gemäß DIN ISO 12156-1 bestimmt werden. Bei den gebräuchlichen Lubricity-Additiven handelt es sich um öllösliche, amphiphile Verbindungen, die einen Film auf den zu schmierenden Motorenteilen bilden.

Für die Beeinträchtigung der durch Amid-Ammoniumsalze (A) eingestellten Kälteeigenschaften kritische Lubricity-Additive (C) sind Amphiphile, die einen Alkyl- oder Alkenylrest mit 10 bis 28 C-Atomen und bevorzugt 12 bis 22 C-Atomen besitzen, an den eine polare Kopfgruppe gebunden ist. Für die Beeinträchtigung der durch Amid-Ammoniumsalze (A) eingestellten Kälteeigenschaften besonders kritische Lubricity-Additive (C) sind Fettsäuren, Oligomere ungesättigter Fettsäuren, Alk(en)ylbernsteinsäuren, Partialester von Polyolen mit Fettsäuren, Oligomere ungesättigter Fettsäuren und/oder Alk(en)ylbernsteinsäuren sowie Fettsäureamide von Alkanolaminen. Am ausgeprägtesten ist der Effekt bei Fettsäuren. Unter Fettsäuren werden aliphatische Monocarbonsäuren mit 8 bis 32 Kohlenstoffatomen verstanden.

Beispiele für Lubricity-Additive (C), deren antagonistischer Effekt erfindungsgemäß überwunden wird, sind gesättigte und insbesondere ungesättigte Fettsäuren mit 10 bis 28 C-Atomen und bevorzugt mit 12 bis 22 C-Atomen wie beispielsweise mit 10 bis 22 C-Atomen oder mit 12 bis 28 C-Atomen im Alkyl- bzw. Alkenylrest. Auch der von Alk(en)ylbernsteinsäuren mit Alk(en)ylresten im genannten Kettenlängenbereich verursachte antagonistische Effekt wird überwunden. Der Alk(en)ylrest der Fettsäuren und/oder Alk(en)ylbernsteinsäuren kann dabei linear, verzweigt oder auch zyklisch sein. Weiterhin wird der von Partialestern der genannten Fettsäuren mit Polyhydroxyverbindungen wie beispielsweise mit Ethylenglykol oder Glycerin hervorgerufene antagonistische Effekt überwunden. Des Weiteren wird der von Amiden obiger Fettsäuren mit primären bzw. sekundären Alkanolaminen mit jeweils 2 bis 4 C-Atomen pro Alkylgruppe wie beispielsweise mit Ethanolamin, Propanolamin, N-Methylethanolamin, Diethanolamin hervorgerufene antagonistische Effekt überwunden. Die Formulierung Alk(en)yl umfasst dabei Alkyl- und Alkenylreste, wobei Alkenylreste einfach oder mehrfach ungesättigt sein können.

Beispiele für Lubricity-Additive im Sinne dieser Erfindung sind Laurinsäure, Myristinsäure, Palmitinsäure, Stearinsäure, Arachinsäure, Palmitoleinsäure, Ölsäure, Elaidinsäure, Erucasäure, Linolsäure, Linolensäure, Dodecenylbernsteinsäure, Tetradecenylbernsteinsäure, Hexadecenylbernsteinsäure, Octadecenylbernsteinsäure und deren Mischungen. In einer bevorzugten Ausführungsform handelt es sich bei dem Lubricity-Additiv um eine aus natürlichen Rohstoffen gewonnene Fettsäuremischung wie beispielsweise um Kokosfettsäure, Palmölfettsäure, Sojaölfettsäure, Rübölfettsäure, Talgfettsäure, oder Tallölfettsäure.

Optional können die genannten Fettsäuren im Gemisch mit mindestens einer polyzyklischen Kohlenwasserstoffverbindung eingesetzt werden. Bevorzugte polyzyklische Kohlenwasserstoffverbindungen sind natürliche Harzsäuren, die aus Baumharzen, insbesondere Nadelbaumharzen, extrahiert wurden. Die Harzsäuren sind bevorzugt ausgewählt aus der Gruppe bestehend aus Abietinsäure, Dihydroabietinsäure, Tetrahydroabietinsäure, Dehydroabietinsäuren, Neoabietinsäure, Pimarsäure, Lävopimarsäure, Palustrinsäure und ihren Derivaten.

Die oben beschriebenen gesättigten und insbesondere ungesättigten Fettsäuren mit 10 bis 28 C-Atomen wie auch die Alk(en)ylbernsteinsäuren mit C₁₀-C₂₈-Alk(en)ylresten sowie ihre bevorzugten Ausführungsformen sind auch als Ausgangsmaterial für die Herstellung von Polyolpartialestern und Alkanolamiden bevorzugt.

Bevorzugte Polyole haben 2 bis 10 C-Atome und 2 bis 6 OH-Gruppen, jedoch höchstens eine OH-Gruppe pro C-Atom. Beispiele für bevorzugte Polyole sind Ethylenglykol, Propylenglykol, Butylenglykol, Glycerin, Pentaerythrit und Sorbit. Partialester bedeutet, dass mindestens eine OH-Gruppe des Polyols nicht verestert wird. Beispiele für Partialester von Fettsäuren mit Polyhydroxyverbindungen sind Ethylenglykolmonostearat, Ethylenglykolmonotalloat, Glycerinmonooelat und Glycerinmonotalloat.

Bevorzugte Alkanolamine sind primäre und sekundäre Amine, die einen bzw. zwei Hydroxyalkylreste tragen. Bevorzugte Hydroxyalkylreste haben zwei bis 4 C-Atomen und insbesondere 2 oder 3 C-Atome. Beispiele für bevorzugte Alkanolamine sind Ethanolamin, Propanolamin, Diethanolamin und Dipropanolamin. Beispiele für Fettsäureamide von Fettsäuren mit Hydroxyaminen sind Stearinsäuremonoethanolamid, Tallölfettsäuremonoethanolamid, Tallölfettsäuremonopropanolamid, Stearinsäurediethanolamid, Tallölfettsäurediethanolamid und Tallöfettsäuredipropanolamid.

Bevorzugte schwefelarme Brennstofföle enthalten 20 bis 2.000 ppm, insbesondere bevorzugt 50 bis 1.000 ppm und speziell 100 bis 500 ppm wie beispielsweise 10 bis 2.000 ppm, 10 bis 1 000 ppm, 10 bis 500 ppm, 20 bis 1.000 ppm, 20 bis 500 ppm, 50 bis 2.000 ppm, 50 bis 500 ppm, 100 bis 2.000 ppm oder 100 bis 1.000 ppm (jeweils m/m) des Lubricity-Additivs (C).

### HARZE (D)

Das erfindungsgemäße Kälteadditiv enthält mindestens ein Harz aus einer mindestens einen Alkylrest tragenden aromatischen Verbindung und mindestens einem Aldehyd und/oder Keton (D). Der Alkylrest kann dabei direkt oder über eine Ester- oder Ethergruppe an das aromatische System gebunden sein. Bevorzugte Alkylreste können gesättigt oder ungesättigt sein. Vorzugsweise besitzen sie 1 bis 20, insbesondere 4 bis 16 und speziell 6 bis 12 C-Atome wie beispielsweise 1 bis 16, 1 bis 12, 4 bis 20, 4 bis 12, 6 bis 20 oder 6 bis 16 C-Atome. Beispiele für bevorzugt Alkylreste sind der n-, iso- und tert.-Butyl-, n- und iso-Pentyl-, n- und iso-Hexyl-, n- und iso-Octyl-, n- und iso-Nonyl-, n- und iso-Decyl-, n- und iso-Dodecyl-, Tetradecyl-, Hexadecyl-, Octadecyl-, Tripropenyl-, Tetrapropenyl-, Tributenyl-, Tetrabutenyl-, Poly(propenyl)- und Poly(isobutenyl)rest.

Bevorzugte Harze sind zum einen Alkylphenol-Aldehydharze, die sich von Alkylphenolen mit ein oder zwei Alkylresten in ortho- und/oder para-Position zur OH-Gruppe ableiten. Besonders bevorzugt als Ausgangsmaterialien sind Alkylphenole, die am Aromaten mindestens zwei zur Kondensation mit Aldehyden befähigte Wasserstoffatome tragen und insbesondere monoalkylierte Phenole. Besonders bevorzugt befindet sich der Alkylrest in der para-Stellung zur phenolischen OH-Gruppe. In einer bevorzugten Ausführungsform werden zur Herstellung der Alkylphenolharze (D) Mischungen von Alkylphenolen mit unterschiedlichen Alkylresten eingesetzt. Die Alkylreste können beispielsweise unterschiedliche Kettenlängen und/oder unterschiedliche Verzweigungsmuster aufweisen (Isomere). So haben sich beispielsweise Harze auf Basis von Butyphenol einerseits und Octyl-, Nonyl- und/oder Dodecylphenol im molaren Verhältnis von 1:10 bis 10:1 andererseits besonders bewährt.

Weitere bevorzugte Alkylphenolharze enthalten Struktureinheiten von Phenolanaloga wie Salicylsäure, Hydroxybenzoesäure sowie deren Derivate wie Ester, Amide und Salze. Besonders bevorzugte Ester, Amide und Salze leiten sich von Alkoholen bzw. Aminen ab, die einen Alkylrest mit der oben beschriebenen Anzahl an C-Atomen tragen.

Geeignete Aldehyde für die Kondensation von einen Alkylrest tragenden aromatischen Verbindungen sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd und insbesondere von Formalin.

Das mittels Gelpermeationschromatographie gegen Poly(styrol)-Standards in THF gemessene Molekulargewicht des Harzes (D) beträgt bevorzugt 500 bis 25.000 g/mol, besonders bevorzugt 800 bis 10.000 g/mol und speziell 1.000 bis 5.000 g/mol wie beispielsweise 1500 bis 3.000 g/mol. Voraussetzung ist hierbei, dass das Harz (D) zumindest in anwendungsrelevanten Konzentrationen von 0,001 bis 1 Gew.-% öllöslich ist.

In einer bevorzugten Ausführungsform handelt es sich bei dem Harz aus mindestens einen Alkylrest tragender aromatischer Verbindung und Aldehyd und/oder Keton (D) um ein Oligo- oder Polymere mit einer repetitiven Struktureinheit der Formel (2) 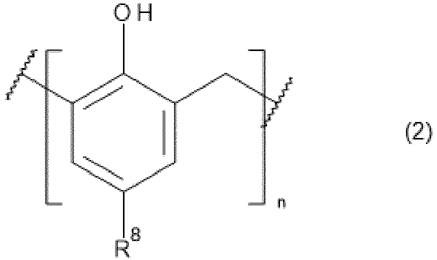 worin
- R⁸: für C₁-C₂₄-Alkyl, O-R⁹, O-C(O)-R⁹ oder -C(O)-O-R⁹,
- R⁹: für C₁-C₂₂-Alkyl oder C₂-C₂₂-Alkenyl und n für eine Zahl von 2 bis 100 steht, enthalten.

Bevorzugt steht R⁸ für C₁-C₂₀-Alkyl und insbesondere für C₄-C₁₆- wie beispielsweise für C₆-C₁₂-Alkyl. Weiterhin bevorzugt steht R⁹ für C₁-C₂₀-Alkyl oder C₂-C₂₀-Alkenyl und insbesondere für C₄-C₁₆-Alkyl oder -Alkenyl wie beispielsweise für C₆-C₁₂-Alkyl oder -Alkenyl. Bevorzugt steht n für eine Zahl von 2 bis 50 und speziell für eine Zahl von 3 bis 25 wie beispielsweise eine Zahl von 5 bis 15.

Harze aus mindestens einen Alkylrest tragenden aromatischen Verbindungen und Aldehyden und/oder Ketonen (D) sind nach bekannten Verfahren zugänglich, z. B. durch Kondensation der entsprechenden Alkylphenole mit Formaldehyd, d.h. mit 0,5 bis 1,5 Mol, bevorzugt 0,8 bis 1,2 Mol Formaldehyd pro Mol Alkylphenol. Die Kondensation kann lösemittelfrei erfolgen, bevorzugt erfolgt sie jedoch in Gegenwart eines nicht oder nur teilweise wassermischbaren inerten organischen Lösemittels wie beispielsweise eines Mineralöls, Alkohols, Ethers und ähnlichem. Besonders bevorzugt sind Lösemittel, die mit Wasser Azeotrope bilden können. Als derartige Lösemittel werden insbesondere Aromaten wie Toluol, Xylol Diethylbenzol und höher siedende kommerzielle Lösemittelgemische wie Shellsol^{®} AB, und Solvent Naphtha eingesetzt. Auch Fettsäuren und deren Derivate wie beispielsweise Ester mit niederen Alkoholen mit 1 bis 5 C-Atomen wie beispielsweise Ethanol und insbesondere Methanol sind als Lösemittel geeignet. Die Kondensation erfolgt bevorzugt zwischen 70 und 200°C wie beispielsweise zwischen 90 und 160°C. Sie wird üblicherweise durch 0,05 bis 5 Gew.-% Basen oder vorzugsweise durch 0,05 bis 5 Gew.-% Säure katalysiert. Als saure Katalysatoren sind neben Carbonsäuren wie Essigsäure und Oxalsäure insbesondere starke Mineralsäuren wie Salzsäure, Phosphorsäure und Schwefelsäure sowie Sulfonsäuren gebräuchliche Katalysatoren. Besonders geeignete Katalysatoren sind Sulfonsäuren, die mindestens eine Sulfonsäuregruppe und mindestens einen gesättigten oder ungesättigten, linearen, verzweigten und/oder cyclischen Kohlenwasserstoffrest mit 1 bis 40 C-Atomen und bevorzugt mit 3 bis 24 C-Atomen enthalten. Besonders bevorzugt sind aromatische Sulfonsäuren, speziell alkylaromatische Mono-Sulfonsäuren mit einem oder mehreren C₁-C₂₈-Alkylresten und insbesondere solche mit C₃-C₂₂-Alkylresten wie beispielsweise mit C₁-C₂₂-Alkylresten. Geeignete Beispiele sind Methansulfonsäure, Butansulfonsäure, Benzolsulfonsäure, p-Toluolsulfonsäure, Xylolsulfonsäure, 2-Mesitylensulfonsäure, 4-Ethylbenzolsulfonsäure, Isopropylbenzolsulfonsäure, 4-Butylbenzolsulfonsäure, 4-Octylbenzolsulfonsäure; Dodecylbenzolsulfonsäure, Didodecylbenzolsulfonsäure und Naphthalinsulfonsäure. Auch Mischungen dieser Sulfonsäuren sind geeignet. Üblicherweise verbleiben diese nach Beendigung der Reaktion als solche oder in neutralisierter Form im Produkt. Bevorzugt werden zur Neutralisation Amine und/oder aromatische Basen eingesetzt, da sie im Produkt verbleiben können; Metallionen enthaltende und damit Asche bildende Salze werden üblicherweise abgetrennt.

Der Anteil von Harz (D) im erfindungsgemäßen Additiv und/oder dem additivierten Brennstofföl ist zwischen 0,1 und 10 Gewichtsteilen bezogen auf die Menge an Amid-Ammoniumsalz (A). Bevorzugt ist er zwischen 0,2 und 5 Gewichtsteilen wie beispielsweise zwischen 0,1 und 5 oder zwischen 0,2 und 10 Gewichtsteilen bezogen auf die Menge an Amid-Ammoniumsalz (A). Im additivierten Brennstofföl ist der Gehalt des Harzes (D) bevorzugt zwischen 1 und 50 Gew.-% und besonders bevorzugt zwischen 2 und 30 Gew.-% wie beispielsweise zwischen 2 und 50 Gew.-% oder zwischen 1 und 30 Gew.-%, jeweils bezogen auf den Gehalt des Brennstofföls an Lubricity-Additiv (C).

### SCHWEFELARMES BRENNSTOFFÖL

Unter schwefelarmen Brennstoffölen werden im Sinne der Erfindung Brennstofföle mit einem Schwefelgehalt von maximal 50 ppm, bevorzugt maximal 20 ppm und speziell mit einem Schwefelgehalt von maximal 10 ppm (m/m) verstanden. Der Schwefelgehalt von Brennstoffölen kann beispielsweise gemäß EN ISO 20846 oder EN ISO 20884 bestimmt werden.

Bevorzugte Brennstofföle sind Mitteldestillate. Als Mitteldestillat bezeichnet man insbesondere solche Mineralöle, die durch Destillation von Rohöl gewonnen werden, im Bereich von etwa 150 bis 450°C und insbesondere im Bereich von etwa 170 bis 390°C sieden wie beispielsweise Kerosin, Jet-Fuel, Diesel und Heizöl. Üblicherweise enthalten Mitteldestillate etwa 5 bis 50 Gew.-% wie beispielsweise etwa 10 bis 35 Gew.-% n-Paraffine, von denen die längerkettigen bei Abkühlung auskristallisieren und die Fließfähigkeit des Mitteldestillats beeinträchtigen können. Besonders vorteilhaft sind die erfindungsgemäßen Kälteadditive in Mitteldestillaten mit einem Aromatengehalt von weniger als 40 Gew.-%, wie beispielsweise weniger als 30 Gew.-%. Besonders vorteilhaft sind die erfindungsgemäßen Zusammensetzungen weiterhin in Mitteldestillaten mit niedrigem Siedeende, das heißt in solchen Mitteldestillaten, die 90 %-Destillationspunkte unter 350°C, insbesondere unter 340°C und in Spezialfällen unter 335°C aufweisen und des Weiteren in solchen Mitteldestillaten, die Siedebreiten zwischen 20 und 90% Destillationsvolumen von weniger als 140°C und insbesondere von weniger als 125°C und speziell zwischen und 120°C wie beispielsweise zwischen 80 und 140°C oder zwischen 80 und 125°C aufweisen. Unter aromatischen Verbindungen wird die Summe aus mono-, di- und polyzyklischen aromatischen Verbindungen verstanden, wie sie mittels HPLC gemäß DIN EN 12916 (Ausgabe 2001)

Bevorzugte Brennstofföle können auch einen oder mehrere synthetische Kraftstoffe enthalten oder aus ihnen bestehen. In einer bevorzugten Ausführungsform enthalten die Brennstofföle insgesamt 1 bis 50 Vol.-%, besonders bevorzugt 2 bis 30 Vol.-% und insbesondere 3 bis 20 Vol.-% eines oder mehrerer synthetischer Kraftstoffe. Beispiele für bevorzugte synthetische Kraftstoffe sind hydrierte Pflanzenöle (Hydrotreated Vegetable Oil; HVO). Diese sind beispielsweise durch katalytische Hydrodeoxygenierung von Pflanzenölen und -fetten wie auch von tierischen Fetten zugänglich. Gegebenenfalls können die hydrierten Pflanzenöle zur Einstellung der Kälteeigenschaften auch einer Isomerisierung unterworfen worden sein. Ein weiteres Beispiel sind mittels der Fischer-Tropsch-Synthese hergestellte synthetische Kraftstoffe.

Bevorzugt enthalten erfindungsgemäß in ihren Kälteeigenschaften verbesserte schwefelarme Brennstofföle 1 bis 100 ppm, besonders bevorzugt 5 bis 75 ppm und speziell 10 bis 50 ppm, wie beispielsweise 1 bis 75 ppm, 1 bis 50 ppm, 5 bis 100 ppm, 5 bis 50 ppm, 10 bis 100 ppm oder 10 bis 75 ppm (jeweils m/m) an Amid-Ammoniumsalz (A) sowie bezogen auf die Menge an Amid-Ammoniumsalz 5 - 100 Gew.-%, bevorzugt 10 bis 70 Gew.-% und speziell 15 bis 65 Gew.-% wie beispielsweise 5 bis 70 Gew.-%, 5 bis 65 Gew.-%, 10 bis 100 Gew.-%, 10 bis 65 Gew.-%, 15 bis 100 Gew.-% oder 15 bis 70 Gew.-% an öllöslichem Amin (B).

Bevorzugt werden dem schwefelarmen Brennstofföl zur Verbesserung seiner Kälteeigenschaften und insbesondere seines CFPP-Werts und/oder seiner Paraffindispergierung 1 bis 100 ppm, besonders bevorzugt 5 bis 75 ppm und speziell 10 bis 50 ppm, wie beispielsweise 1 bis 75 ppm, 1 bis 50 ppm, 5 bis 100 ppm, 5 bis 50 ppm, 10 bis 100 ppm oder 10 bis 75 ppm (jeweils m/m) an Amid-Ammoniumsalz (A) sowie bezogen auf die Menge an Amid-Ammoniumsalz (A) 5 - 100 Gew.-%, bevorzugt 10 bis 70 Gew.-% und speziell 15 bis 65 Gew.-% wie beispielsweise 5 bis 70 Gew.-%, 5 bis 65 Gew.-%, 10 bis 100 Gew.-%, 10 bis 65 Gew.-%, 15 bis 100 Gew.-% oder 15 bis 70 Gew.-% an öllöslichem Amin (B) zugesetzt.

### WEITERE KOMPONENTEN (E) - (G)

In einer bevorzugten Ausführungsform wird das Amid-Ammoniumsalz (A) in Kombination mit einem oder mehreren weiteren bekannten Kaltfließverbesserern dem schwefelarmen Brennstofföl zugesetzt. Dabei können das Amid-Ammoniumsalz (A), das erfindungsgemäße Additiv aus (A), (B) und (D) wie auch die weiteren Kaltfließverbesserer jeweils separat oder auch als Bestandteil einer Additivformulierung dem Brennstofföl zugesetzt werden. Bevorzugte Additivformulierungen und/oder die mit ihnen behandelten Brennstofföle enthalten demzufolge weiterhin einen oder mehrere weitere bekannte Kaltfließverbesserer. Bevorzugte weitere Kaltfließverbesserer sind
E) öllösliche Polyoxyalkylenverbindungen
F) Kammpolymere
G) Ethylen-Copolymere

In einer weiteren bevorzugten Ausführungsform enthalten die erfindungsgemäßen Kälteadditive und/oder die mit ihnen behandelten Brennstofföle als weiteren Kaltfließverbesserer eine öllösliche Polyoxyalkylenverbindung (E). Beispiele für bevorzugte öllösliche Polyoxyalkylenverbindungen (E) sind Ester, Ether und Ether/ester von Polyolen, die mindestens einen Alkylrest mit 12 bis 30 C-Atomen tragen. In einer bevorzugten Ausführungsform besitzen die öllöslichen Polyoxyalkylenverbindungen (E) mindestens 2, wie beispielsweise 3, 4 oder 5 aliphatische Kohlenwasserstoffreste. Bevorzugt besitzen diese Reste unabhängig voneinander 16 bis 26 C-Atome wie beispielsweise 17 bis 24 C-Atome. Bevorzugt sind diese Reste der öllöslichen Polyoxyalkylenverbindungen (E) linear. Weiterhin bevorzugt sind sie weitestgehend gesättigt, insbesondere handelt es sich dabei um Alkylreste. Ester sind besonders bevorzugt.

Für die Herstellung bevorzugter Polyoxyalkylenverbindungen (E) besonders geeignete Polyole sind Polyethylenglykole, Polypropylenglykole, Polybutylenglykole und deren Mischpolymerisate mit einem mittleren Molekulargewicht von 100 bis 5.000 g/mol und vorzugsweise von 200 bis 2.000 g/mol. In einer bevorzugten Ausführungsform leiten sich die öllöslichen Polyoxyalkylenverbindungen (E) von Polyolen mit 3 oder mehr OH-Gruppen, besonders bevorzugt von Polyolen mit 3 bis 50 OH-Gruppen und speziell von Polyolen mit 4 bis 10 OH-Gruppen wie beispielsweise von Polyolen mit 3 bis 10 OH-Gruppen oder 4 bis 50 OH-Gruppen ab. Beispiele für bevorzugte Polyole sind Neopentylglykol, Glycerin, Trimethylolethan, Trimethylolpropan, Sorbitan, Pentaerythrit, sowie den daraus durch Kondensation zugänglichen Oligomeren mit 2 bis 10 Monomereinheiten wie z.B. Polyglycerin. Auch höhere Polyole wie beispielsweise Sorbitol, Saccharose, Glucose, Fructose sowie deren Oligomere wie beispielsweise Cyclodextrin sind als Polyole geeignet, sofern ihre veresterten bzw. veretherten Alkoxilate zumindest in anwendungsrelevanten Mengen öllöslich sind. Bevorzugte Polyoxyalkylenverbindungen haben somit einen verzweigten Polyoxyalkylenkern, an den mehrere Öllöslichkeit verleihende Alkylreste gebunden sind.

Die Polyole sind im Allgemeinen mit 3 bis 70 mol Alkylenoxid, bevorzugt 4 bis 50, insbesondere 5 bis 20 mol Alkylenoxid wie beispielsweise mit 3 bis 50, mit 3 bis 20, mit 4 bis 70, mit 4 bis 30, mit 5 bis 70 oder mit 5 bis 20 mol Alkylenoxid pro Hydroxylgruppe des Polyols umgesetzt. Bevorzugte Alkylenoxide sind Ethylenoxid, Propylenoxid und/oder Butylenoxid. Die Alkoxylierung erfolgt nach bekannten Verfahren.

Für die Veresterung der alkoxylierten Polyole bevorzugte Fettsäuren haben 12 bis 30 und insbesondere 16 bis 26 C-Atome wie beispielsweise 12 bis 26 oder 16 bis 30 C-Atome. Geeignete Fettsäuren sind beispielsweise Laurin-, Tridecan-, Myristin-, Pentadecan , Palmitin-, Margarin-, Stearin-, Isostearin-, Arachin- und Behensäure, Öl- und Erucasäure, Palmitolein-, Myristolein-, Ricinolsäure, sowie aus natürlichen Fetten und Ölen gewonnene Fettsäuremischungen. Bevorzugte Fettsäuremischungen enthalten mehr als 50 mol % Fettsäuren mit mindestens 20 C-Atomen. Bevorzugt enthalten weniger als 50 mol-% der zur Veresterung verwendeten Fettsäuren Doppelbindungen, insbesondere weniger als 10 mol-%; speziell sind sie weitestgehend gesättigt. Die Veresterung kann auch ausgehend von reaktiven Derivaten der Fettsäuren wie Estern mit niederen Alkoholen (z. B. Methyl- oder Ethylester) oder Anhydriden erfolgen.

Unter weitestgehend gesättigt wird im Sinne der vorliegenden Erfindung eine lodzahl (nach Wijs gemäß EN 14111) der verwendeten Fettsäure bzw. des verwendeten Fettalkohols von bis zu 5 g I₂ pro 100 g Fettsäure bzw. Fettalkohol verstanden.

Polyol und Fettsäure werden für die Veresterung bezogen auf den Gehalt an Hydroxylgruppen einerseits und Carboxylgruppen andererseits im Verhältnis 1,5 : 1 bis 1 : 1,5 eingesetzt, bevorzugt im Verhältnis 1,1 : 1 bis 1 : 1,1 und insbesondere equimolar. Die Säurezahl der gebildeten Ester liegt im Allgemeinen unter 15 mg KOH/g, bevorzugt unter 10 mg KOH/g speziell unter 5 mg KOH/g. Die OH-Zahl der Ester liegt bevorzugt unter 20 mg KOH/g und speziell unter 10 mg KOH/g.

In einer weiteren bevorzugten Ausführungsform werden nach der Alkoxylierung des Polyols die endständigen Hydroxylgruppen zum Beispiel durch Oxidation oder durch Umsetzung mit Dicarbonsäuren in endständige Carboxylgruppen überführt. Durch Umsetzung mit Fettalkoholen mit 8 bis 50, insbesondere 12 bis 30, speziell 16 bis 26 C-Atomen werden ebenfalls erfindungsgemäße Polyoxyalkylenester erhalten. Bevorzugte Fettalkohole bzw. Fettalkoholmischungen enthalten mehr als 50 mol % Fettalkohole mit mindestens 20 C-Atomen. Bevorzugt enthalten weniger als 50 mol-% der zur Veresterung verwendeten Fettalkohole Doppelbindungen, insbesondere weniger als 10 mol-%; speziell sind sie weitestgehend gesättigt. Auch Ester alkoxylierter Fettalkohole mit Fettsäuren, die oben genannte Anteile an Poly(alkylenoxiden) enthalten und deren Fettalkohol und Fettsäure oben genannte Alkylkettenlängen und Sättigungsgrade besitzen, sind erfindungsgemäß geeignet.

In einer weiteren bevorzugten Ausführungsform werden die oben beschriebenen alkoxylierten Polyole durch Veretherung mit Fettalkoholen mit 8 bis 50, insbesondere 12 bis 30, speziell 16 bis 26 C-Atomen wie beispielsweise mit 8 bis 30, mit 8 bis 26, mit 12 bis 50, mit 12 bis 26, mit 16 bis 50 oder mit 16 bis 30 C-Atomen in Polyoxyalkylenverbindungen (E) überführt. Die hierfür bevorzugten Fettalkohole sind linear und weitestgehend gesättigt. Bevorzugt erfolgt die Veretherung vollständig oder zumindest weitestgehend vollständig. Die Veretherung wird nach bekannten Verfahren durchgeführt.

Besonders bevorzugte Polyoxyalkylenverbindungen (E) leiten sich von Polyolen mit 3, 4 und 5 OH-Gruppen ab, die pro Hydroxylgruppe des Polyols etwa 5 bis 10 mol von Ethylenoxid abgeleitete Struktureinheiten tragen und weitestgehend vollständig mit weitestgehend gesättigten C₁₇-C₂₄-Fettsäuren verestert sind. Weitere besonders bevorzugte Polyoxyalkylenverbindungen (E) sind mit weitestgehend gesättigten C₁₇-C₂₄-Fettsäuren veresterte Polyethylenglykole mit Molekulargewichten von etwa 350 bis 1.000 g/mol. Beispiele für besonders geeignete Polyoxyalkylenverbindungen (E) sind mit Stearin- und insbesondere mit Behensäure veresterte Polyethylenglykole mit Molekulargewichten zwischen 350 und 800 g/mol wie Neopentylglykol-14-ethylenoxid-distearat (mit 14 mol Ethylenoxid alkoxyliertes und anschließend mit 2 mol Stearinsäure verestertes Neopentylglykol), Neopentylglykol-14-ethylenoxid-dibehenat, Glycerin-20-ethylenoxid-tristearat, Glycerin-20-ethylenoxid-dibehenat, Glycerin-20-ethylenoxid-tribehenat, Trimethylolpropan-22-ethylenoxid-tribehenat, Sorbitan-25-ethylenoxid-tristearat, Sorbitan-25-ethylenoxid-tetrastearat, Sorbitan-25-ethylenoxid-tribehenat, Sorbitan-25-ethylenoxid-tetrabehenat; Pentaerythritol-30-ethylenoxid-tribehenat, Pentaerythritol-30-ethylenoxid-tetrastearat, Pentaerythritol-30-ethylenoxid-tetrabehenat und Pentaerythritol-20-ethylenoxid-10-propylenoxid-tetrabehenat.

In einer weiteren bevorzugten Ausführungsform enthalten die erfindungsgemäßen Kälteadditive und/oder die mit ihnen behandelten Brennstofföle als weiteren Kaltfließverbesserer ein Kammpolymer (F). Bevorzugte Kammpolymere (F) können beispielsweise durch die Formel (3) 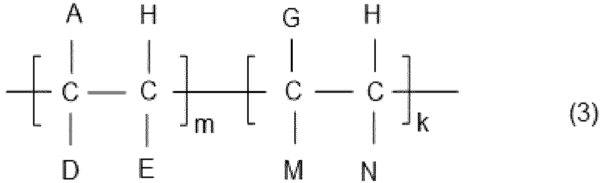 beschrieben werden. Darin bedeuten
- A: R¹⁰, COOR¹⁰, OCOR¹⁰, R¹¹-COOR¹⁰, OR¹⁰;
- D: H, CH₃, A oder R¹¹;
- E: H, A;
- G: H, R¹¹, R¹¹-COOR¹⁰, einen Arylrest oder einen heterocyclischen Rest;
- M: H, COOR¹¹, OCOR¹¹, OR¹¹, COOH;
- N: H, R¹¹, COOR¹¹, OCOR¹¹, einen Arylrest;
- R¹⁰: eine Kohlenwasserstoffkette mit 8 bis 20, bevorzugt 10 bis 18 Kohlenstoffatomen;
- R¹¹: eine Kohlenwasserstoffkette mit 1 bis 10 Kohlenstoffatomen;
- m: eine Zahl zwischen 0,4 und 1,0; und
- k: eine Zahl zwischen 0 und 0,6.

Bevorzugte Kammpolymere (F) sind beispielsweise Copolymere ethylenisch ungesättigter Dicarbonsäureester wie Malein- oder Fumarsäureester mit anderen ethylenisch ungesättigten Monomeren wie Olefinen oder Vinylestern wie beispielsweise Vinylacetat. Besonders geeignete Olefine sind dabei α-Olefine mit 10 bis 20 und speziell 12 bis 18 C-Atomen wie beispielsweise 1-Decen, 1-Dodecen, 1-Tetradecen, 1-Hexadecen, 1-Octadecen und deren Mischungen. Auch längerkettige Olefine auf Basis oligomerisierter C₂-C₆-Olefine wie beispielsweise Poly(isobutylen) mit hohem Anteil endständiger Doppelbindungen sind als Comonomere geeignet. Üblicherweise werden diese Copolymere zu mindestens 50 mol-% bezogen auf ihren Gehalt an Carboxylgruppen mit Alkoholen mit 10 bis 20 und speziell 12 bis 18 C-Atomen verestert. Geeignete Alkohole umfassen n-Decan-1-ol, n-Dodecan-1-ol, n-Tetradecan-1-ol, n-Hexadecan-1-ol, n-Octadecan-1-ol und deren Mischungen. Besonders bevorzugt sind Mischungen aus n Tetradecan-1-ol und n-Hexadecan-1-ol.

Als Kammpolymere (F) ebenfalls geeignet sind Poly(alkylacrylate), Poly(alkylmethacrylate) und Poly(alkylvinylether), die sich von Fettalkoholen mit 10 bis 20 und speziell 12 bis 18 C-Atomen ableiten sowie Poly(vinylester), die sich von Fettsäuren mit 10 bis 20 und speziell 12 bis 18 C-Atomen ableiten. Bevorzugte Kammpolymere (F) haben ein gewichtsmittleres Molekulargewicht zwischen 10.000 und 200.000 g/mol.

In einer weiteren bevorzugten Ausführungsform enthalten die erfindungsgemäßen Kälteadditive und/oder die mit ihnen behandelten Brennstofföle als weiteren Kaltfließverbesserer ein Ethylen-Copolymer (G). Bevorzugte Ethylen-Copolymere (G) sind Copolymere aus Ethylen und olefinisch ungesättigten Verbindungen. Als Ethylen-Copolymere (G) eignen sich insbesondere solche, die neben Ethylen 8 bis 21 mol-% und insbesondere 10 bis 18 mol % einer oder mehrerer olefinisch ungesättigter Verbindungen als Comonomere enthalten. Bevorzugte olefinisch ungesättigte Verbindungen sind Vinylester, Acrylester, Methacrylester, Alkylvinylether und/oder Alkene.

Als Comonomer bevorzugte Vinylester besitzen die Formel (4)

CH₂=CH-OCOR¹² (4)

worin R¹² für C₁ bis C₃₀-Alkyl, vorzugsweise C₄ bis C₁₆-Alkyl und speziell C₆- bis C₁₂-Alkyl wie beispielsweise C₁ bis C₁₆-Alkyl oder C₁-C₁₂-Alkyl steht. In einer weiteren Ausführungsform können die genannten Alkylgruppen mit einer oder mehreren Hydroxylgruppen substituiert sein. In einer weiteren bevorzugten Ausführungsform steht R¹² für einen linearen oder verzweigten Alkylrest und besonders bevorzugt für einen Neoalkylrest mit 7 bis 11 Kohlenstoffatomen, insbesondere mit 8, 9 oder 10 Kohlenstoffatomen. Besonders bevorzugte Vinylester leiten sich von sekundären und insbesondere tertiären Carbonsäuren ab, deren Verzweigung sich in alpha-Position zur Carbonylgruppe befindet. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester.

In einer weiteren bevorzugten Ausführungsform enthalten die Ethylen-Copolymere (G) Vinylacetat und mindestens einen weiteren Vinylester der Formel 4, worin R¹² für C₄ bis C₃₀-Alkyl, vorzugsweise für C₄ bis C₁₆-Alkyl und speziell für C₆- bis C₁₂-Alkyl steht.

Bei den als Comonomer bevorzugten Acrylestern handelt es sich um solche der Formel (5)

CH₂=CR¹³-COOR¹⁴ (5)

worin R¹³ für Wasserstoff oder Methyl und R¹⁴ für C₁- bis C₃₀-Alkyl, vorzugsweise für C₄- bis C₁₆-Alkyl und speziell für C₆- bis C₁₂-Alkyl wie beispielsweise für C₁- bis C₁₆-Alkyl oder für C₁- bis C₁₂-Alkyl steht. Geeignete Acrylester umfassen z.B. Methyl(meth)acrylat, Ethyl(meth)acrylat, Propyl(meth)acrylat, n- und iso-Butyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere.

Bei den als Comonomer bevorzugten Alkylvinylethern handelt es sich um Verbindungen der Formel (6)

CH₂=CH-OR¹⁵ (6)

worin R¹⁵ für C₁- bis C₃₀-Alkyl, vorzugsweise für C₄- bis C₁₆-Alkyl und speziell für C₆- bis C₁₂-Alkyl wie beispielsweise für C₁- bis C₁₆-Alkyl oder für C₁- bis C₁₂-Alkyl steht. Geeignete Alkylvinylether umfassen Methylvinylether, Ethylvinylether, iso-Butylvinylether. In einer weiteren Ausführungsform können die genannten Alkylgruppen mit einer oder mehreren Hydroxylgruppen substituiert sein.

Bei den als Comonomer bevorzugten Alkenen handelt es sich vorzugsweise um einfach ungesättigte Kohlenwasserstoffe mit 3 bis 30 Kohlenstoffatomen, insbesondere mit 4 bis 16 Kohlenstoffatomen und speziell mit 5 bis 12 Kohlenstoffatomen wie beispielsweise mit 3 bis 16 oder 3 bis 12 C-Atomen. Bevorzugte Alkene umfassen Propen, Buten, Isobutylen, Penten, Hexen, 4-Methylpenten, Octen, Diisobutylen sowie Norbornen und seine Derivate wie Methylnorbornen und Vinylnorbornen.

Besonders bevorzugte Ethylen-Copolymere (G) sind Terpolymerisate, die außer Ethylen 3,5 bis 20 mol-%, insbesondere 8 bis 15 mol-% Vinylacetat und 0,1 bis 12 mol-%, insbesondere 0,2 bis 5 mol-% mindestens eines längerkettigen und bevorzugt verzweigten Vinylesters wie beispielsweise 2-Ethylhexansäurevinylester, Neononansäurevinylester oder Neodecansäurevinylester enthalten, wobei der gesamte Comonomergehalt der Terpolymerisate vorzugsweise zwischen 8 und 21 mol-%, insbesondere zwischen 12 und 18 mol-% wie beispielsweise zwischen 8 und 18 mol-% oder zwischen 12 und 21 mol-% liegt. Weitere besonders bevorzugte Copolymere enthalten neben Ethylen und 8 bis 18 mol-% eines Vinylesters von C₂- bis C₁₂-Carbonsäuren noch 0,5 bis 10 mol-% Olefine wie Propen, Buten, Isobutylen, Hexen, 4-Methylpenten, Octen, Diisobutylen und/oder Norbornen.

Vorzugsweise haben die Ethylen-Copolymere (G) eine Schmelzviskosität bei 140°C von 20 bis 10.000 mPas, insbesondere von 30 bis 5.000 mPas, speziell von 50 bis 2.000 mPas. Das mittels Gelpermeationschromatographie in THF gegen Poly(styrol)-standards bestimmte gewichtsmittlere Molekulargewicht liegt bevorzugt zwischen 3.500 und 30.000 g/mol und besonders bevorzugt zwischen 5.000 und 15.000 g/mol. Die mittels ¹H-NMR-Spektroskopie bestimmten Verzweigungsgrade liegen bevorzugt zwischen 1 und 9 CH₃/100 CH₂-Gruppen, insbesondere zwischen 2 und 6 CH₃/100 CH₂-Gruppen, die nicht aus den Comonomeren stammen.

In einer bevorzugten Ausführungsform werden Mischungen aus zwei oder mehr der oben genannten Ethylen-Copolymere (G) eingesetzt. Die derartigen Mischungen zu Grunde liegenden Ethylen-Copolymere (G) unterscheiden sich in mindestens einem Charakteristikum; beispielsweise können sie unterschiedliche Comonomere enthalten, unterschiedliche Comonomergehalte, Molekulargewichte und/oder Verzweigungsgrade aufweisen.

Das Mischungsverhältnis zwischen dem erfindungsgemäßen Additiv und den weiteren Bestandteilen (E), (F) und/oder (G) kann je nach Anwendungsfall variieren. In bevorzugten Additiven liegt das Mischungsverhältnis zwischen dem erfindungsgemäßen Additiv einerseits und den weiteren Bestandteilen (E), (F) und/oder (G) bezogen auf die Wirkstoffe bevorzugt jeweils zwischen 1:20 und 20:1, besonders bevorzugt zwischen 1:10 und 10:1 und speziell zwischen 1: 5 und 5:1 (m/m) wie beispielsweise zwischen 1:20 und 10:1, zwischen 1:20 und 5:1, zwischen 1:10 und 20:1, zwischen 1:10 und 5:1, zwischen 1:5 und 20:1 oder zwischen 1:5 und 10:1.

Die erfindungsgemäßen Kälteadditive werden zwecks einfacherer Handhabung bevorzugt als Konzentrate eingesetzt, die neben dem Kälteadditiv 10 bis 95 Gew.-%, bevorzugt 20 bis 80 Gew.-% und insbesondere 25 bis 60 Gew.-% an Lösemittel wie beispielsweise 10 bis 80 Gew.-%, 10 bis 60 Gew.-%, 20 bis 95 Gew.-%, 20 bis 60 Gew.-%, 25 bis 95 Gew.-% oder 25 bis 80 Gew.-% an Lösemittel enthalten. Bevorzugte Lösemittel sind höhersiedende aliphatische, aromatische Kohlenwasserstoffe, Alkohole, Ester, Ether und deren Gemische.

Die erfindungsgemäßen Kälteadditive können allein oder auch zusammen mit anderen Additiven verwendet werden, z.B. mit weiteren Kaltfließverbesserern, mit Entwachsungshilfsmitteln, mit Detergenzadditiven, mit Antioxidantien, Cetanzahlverbesserern, Dehazern, Demulgatoren, Entschäumern, Farbstoffen, Korrosionsinhibitoren, Lubricity-Additiven, Schlamminhibitoren, Odorantien und/oder Zusätzen zur Erniedrigung des Cloud-Points.

Das erfindungsgemäße Additiv verbessert die Kälteeigenschaften von schwefelarmen Brennstoffölen wie Kerosin, Jet-Fuel, Diesel Marinediesel und Heizöl, die ein Lubricity-Additiv (C) enthalten. Die Verbesserung äußert sich zum Beispiel in der Absenkung von Cloud Point, Pour Point, CFPP-Wert und/oder der Verbesserung der Paraffindispergierung. Es ist besonders wirksam in Brennstoffölen mit geringem Aromatengehalt und insbesondere in Brennstoffölen mit einem Aromatengehalt von weniger als 40 Gew.-%, wie beispielsweise weniger als 30 Gew.-%. Besonders wirksam ist das erfindungsgemäße Additiv weiterhin in Brennstoffölen mit niedrigem Siedeende, und insbesondere in Brennstoffölen mit einem 90 %-Destillationspunkt von unter 350°C, insbesondere von unter 340°C und speziell von unter 335°C. Besonders wirksam ist das erfindungsgemäße Additiv weiterhin in Brennstoffölen mit Siedebreiten zwischen 20 und 90% Destillationsvolumen von weniger 140°C und insbesondere von weniger als 125°C und speziell zwischen 100 und 120°C wie beispielsweise zwischen 100 und 140°C oder zwischen 100 und 125°C. Besonders wirksam ist das erfindungsgemäße Additiv in Brennstoffölen mit gleichzeitig geringem Aromatengehalt und niedrigem Siedeende.

Die Vorteile der verschiedenen Aspekte der vorliegenden Erfindung auf die Paraffindispergierung treten besonders ausgeprägt zu Tage, wenn die Abkühlung des Brennstofföl schnell erfolgt, beispielsweise mit einer Abkühlrate von -0,5°C/min oder schneller wie beispielsweise mit -1,5°C/min oder -3°C/min. Die Vorteile der verschiedenen Aspekte der vorliegenden Erfindung zeigen sich weiterhin besonders ausgeprägt bei längerer Lagerung von mehr als 16 Stunden wie beispielsweise 24 Stunden, 60 Stunden oder mehr. Weiterhin besonders ausgeprägt sind Vorteile bei einer Lagerung des additivierten Brennstofföls bei Temperaturen von 5°C und mehr, wie beispielsweise 8°C und mehr und insbesondere 10°C und mehr unterhalb des Cloud Points des Brennstofföls. Besonders vorteilhaft sind die erfindungsgemäßen Additive bei einer langen Lagerung bei sehr niedriger Temperatur.

### BEISPIELE

Alle Angaben in Prozent wie auch in ppm beziehen sich auf Gewichtsanteile sofern nicht anders ausgewiesen.

Zur Beurteilung der Verbesserung der Kaltfließeigenschaften von Brennstoffölen durch die erfindungsgemäßen Additive wurden, die in Tabelle 1 charakterisierten Brennstofföle verwendet. Messungen des Cloud Points erfolgten gemäß ISO 3015 und des CFPP-werts (Cold Filter Plugging Test) nach EN 116. Molekulargewichte wurden mittels Gelpermationschromatographie (GPC) in THF gegen Poly(styrol)-Standards bestimmt. Die in den Versuchen der Tabellen 3 bis 8 eingesetzten Mengen an öllöslichem Amin B (ppm) sind zusätzlich als Gew.-% bezogen auf die dem Brennstofföl zugesetzte Menge (Wirkstoffgehalt) an Amid-Ammoniumsalz (A) ausgewiesen.

Die Paraffindispergierung wurde in Sedimentationstests bestimmt, die wie folgt durchgeführt wurden:
350 ml des Brennstofföls wurden in einem graduierten Messzylinder auf 60°C erwärmt und mit den in den Tabellen 4, 7 und 8 spezifizierten Mengen der in den Tabellen 2A bis 2D charakterisierten Additive versetzt. Die in den Tabellen angegebenen Dosierraten geben die jeweils zugegebenen Massen an Wirkstoffen bezogen auf die Masse des Brennstofföls (Massen-ppm) an.

Das so behandelte Brennstofföl wurde auf Raumtemperatur abgekühlt. 50 mL der Probe wurden zur Bestimmung von CFPP und Cloud Point (vor) entnommen. Die verbleibenden 300 ml wurden im graduierten Messzylinder in einem Kälteschrank mit einer Kühlrate von -1,5°C/min auf die jeweilige Lagertemperatur abgekühlt. Nach der in den Tabellen 4 und 7 angegebenen Lagerdauer wurde die Probe visuell beurteilt. Dabei wurden das Volumen der sedimentierten Paraffinphase sowie das Aussehen der darüberstehenden Brennstoffölphase bestimmt und beurteilt. Eine Quantifizierung erfolgte in Volumenprozent Sediment. Eine geringe Sedimentmenge und eine möglichst homogen trübe Brennstoffölphase zeigen eine gute Paraffindispergierung.

Zusätzlich wurden direkt nach der Kaltlagerung die oberen und unteren 20 Vol.-% der Probe isoliert und Cloud Point sowie CFPP beider Phasen bestimmt.

Der Sedimentationstest galt als bestanden, wenn folgende fünf Kriterien erfüllt waren.
- Kriterium 1:: Die visuelle Beurteilung der Dispergierung (vis) muss eine durchgehende Trübung der Probe bzw. ein Sedimentvolumen von < 1% aufweisen (d). Bei Anwesenheit eines größeren Sediments (s) gilt der Test als nicht bestanden.
- Kriterium 2:: Der CP der unteren Phase darf maximal 2 K über dem CP des Öls vor der Lagerung sein (ΔCPᵤ)
- Kriterium 3:: Der CP der oberen Phase darf maximal 2 K unterhalb des CP des Öls vor der Lagerung sein (ΔCPₒ)
- Kriterium 4:: Der CFPP der unteren Phase darf maximal 2 K über dem CFPP des Öls vor der Lagerung sein (ΔCFPPᵤ)
- Kriterium 5:: Der CFPP der oberen Phase darf maximal 2 K unterhalb dem CFPP des Öls vor der Lagerung sein (ΔCFPPₒ)

Eine nur geringe Abweichung des Cloud Points und des Cold Filter Plugging Points der unteren Phase und der oberen Phase vom Blindwert des Öls zeigt eine gute Paraffindispergierung.

**Tabelle 1: Charakterisierung der verwendeten Testöle:**

| | | | Testöl 1 | Testöl 2 | Testöl 3 | Testöl 4 | Testöl 5 | Testöl 6 | Testöl 7 |
|---|---|---|---|---|---|---|---|---|---|
| Destillation | | | | | | | | | |
| | IBP | [°C] | 196.7 | 176.8 | 176.2 | 187.3 | 201.4 | 173.2 | 183.4 |
| | 20% | [°C] | 240.8 | 219.6 | 223.1 | 246.7 | 249.7 | 223.2 | 239.2 |
| | 90% | [°C] | 327.2 | 318.9 | 331.0 | 332,8 | 333.8 | 332.9 | 328.1 |
| | (90-20)% | [°C] | 86.4 | 99.3 | 107.9 | 86,1 | 84.1 | 109.7 | 88.9 |
| | FBP | [°C] | 355.1 | 340.1 | 358.1 | 360,6 | 354.9 | 357.4 | 358.7 |
| Cloud Point | | [°C] | -11.2 | -16.0 | -7.1 | -7.1 | -8 | -7.8 | -7.0 |
| CFPP | | [°C] | -11 | -18 | -10 | -8 | -8 | -8 | -8 |
| Pour Point | | [°C] | -21 | -24 | -15 | -15 | -12 | -18 | -15 |
| Dichte @15°C | | [g/cm³] | 0.8398 | 0.8412 | 0.8304 | 0.838 | 0.8563 | 0.8328 | 0.837 |
| Schwefelgehalt | | [ppm] | 9 | 7 | 9 | 8 | 7 | 9 | 9 |
| Aromatengehalt | | [Gew.-%] | 32.75 | 29.9 | 24.7 | 28.67 | 23.94 | 19.09 | 29.5 |
| davon mono | | [Gew.-%] | 26.4 | 24.3 | 22.5 | 23.8 | 20.76 | 17.89 | 22.9 |
| | di | [Gew.-%] | 5.87 | 4.32 | 2.0 | 4.53 | 3.01 | 1.2 | 6.4 |
| | poly | [Gew.-%] | 0.48 | 0.38 | 0.2 | 0.34 | 0.17 | 0 | 0.2 |
| n-Paraffin Gehalt [Gew.-%] | | | 23.2 | 24.3 | 26.5 | 23.7 | 26.3 | 22.5 | 23.5 |

**Tabelle 2A: Charakterisierung der eingesetzten Amid-Ammoniumsalze (A)**

| | |
|---|---|
| A1 | Umsetzungsprodukt eines Copolymers aus C₁₄/C₁₆-α-Olefin und Maleinsäureanhydrid mit 2 Equivalenten hydriertem Ditalgfettamin |
| A2 | Umsetzungsprodukt aus Ethylendiamintetraessigsäure mit 4 Equivalenten Ditalgfettamin zum Amid-Ammoniumsalz |
| A3 | Umsetzungsprodukts aus Phthalsäureanhydrid und 2 Equivalenten Di(hydriertem Talgfett)amin |

**Tabelle 2B: Charakterisierung der eingesetzten Öllösliche Amine (B)**

| | | | |
|---|---|---|---|
| B1 | Di(talgfettamin) | B6 | Talgfettpropylendiamin |
| B2 | Di(stearylamin) | B7 | Dimethylhexadecylamin |
| B3 | Talgfettamin | B8 | Dimethylcocosfettamin |
| B4 | Dimethyllaurylamin | B9 | Triethylentetraamin |
| B5 | Dimethyltetradecylamin | | |

**Tabelle 2C: Charakterisierung der eingesetzten Lubricity-Additive (C)**

| | |
|---|---|
| C1 | Tallölfettsäure |
| C2 | C₁₈-Alkenylbernsteinsäure-bis(ethylenglykolester) |
| C3 | Ölsäurediethanolamid |
| C4 | Ölsäure |

**Tabelle 2D: Charakterisierung der eingesetzten weiteren Kaltfließverbesserer D) - (G)**

| | |
|---|---|
| D1 | Nonylphenol-Formaldehydharz, M_{w} = 4.500 g/mol, 60 %ig in höhersiedendem aromatischem Lösemittel. |
| D2 | Benzoesäuredodecylester-Formaldehydharz, M_{w} = 2.100 g/mol; 50% ig in höher siedendem aromatischen Lösemittel |
| E1 | Behensäureester von alkoxyliertem Glycerin, Mₚ= 3.100 g/mol; 50 % ig in höher siedendem aromatischem Lösungsmittel |
| E2 | PEG 400-dibehenat, 50 % ig in höher siedendem aromatischem Lösungsmittel |
| F1 | Copolymer aus Fumarsäure-ditetradecylester, 50 %ig in höhersiedendem aromatischem Lösemittel |
| F2 | Poly(C_{12/14}-alkylacrylat), M_{w} = 85.000 g/mol; 50 %ig in höhersiedendem aromatischem Lösemittel |
| G1 | Copolymer aus Ethylen und 13,5 mol-% Vinylacetat mit einer bei 140°C gemessenen Schmelzviskosität V₁₄₀ von 125 mPas, 65 %ig in Kerosin. Dichte (40°C) = 0,85 g/cm³ |
| G2 | Terpolymer aus Ethylen, 13 mol-% Vinylacetat und 2 mol-% Neodecansäurevinylester mit einer bei 140°C gemessenen Schmelzviskosität V₁₄₀ von 95 mPas, 65 %ig in Kerosin. Dichte (40°C) = 0,86 g/cm³ |
| G3 | Mischung gleicher Teile G1 und G2 |
| G4 | Terpolymer aus Ethylen, 13 mol-% Vinylacetat und 5 mol-% Propylen mit einer bei 140°C gemessenen Schmelzviskosität V₁₄₀ von 110 mPas, 65 %ig in Kerosin. Dichte (40°C) = 0,87 g/cm³ |

Sowohl die Amid-Ammoniumsalze (A) als auch die öllöslichen Amine (B) wurden zwecks einfacher Handhabung als 60%ige Konzentrate in einem hochsiedenden aromatischen Lösemittelgemisch eingesetzt. Lubricity Addive (C) wurden ohne vorherige Verdünnung eingesetzt. Die in den Tabellen 3-9 angegebenen Dosierraten beziehen sich auf die jeweils zugesetzte Wirkstoffmenge.

**Tabelle 3: Unterdrückung des von Lubricity-Additiven verursachten Antagonismus auf den CFPP-Wert durch Amine in Testöl 1**

| Als weiteren Fließverbesserer enthielt das Testöl 260 Vol.-ppm einer Mischung aus 1 Gew.-Teil D1 und 6 Gew.-Teilen G4 (CFI 1; Dichte@40°C = 0,91 g/cm³). | | | | | |
|---|---|---|---|---|---|
| Bsp. | A1 [ppm] | B1 | | C1 [ppm] | CFPP |
| | | [ppm] | [Gew.-%] | | [°C] |
| 1 (Vgl.) | 24 | - | - | - | -29 |
| 2 (Vgl.) | 24 | 4 | 17 | - | -29 |
| 3 (Vgl.) | 24 | 10 | 42 | - | -29 |
| 4 (Vgl.) | 24 | 20 | 83 | - | -29 |
| 5 (Vgl.) | 24 | - | - | 200 | -24 |
| 6 | 24 | 4 | 17 | 200 | -26 |
| 7 | 24 | 10 | 42 | 200 | -28 |
| 8 | 24 | 20 | 83 | 200 | -29 |
| 9 (Vgl.) | 24 | - | - | 350 | -22 |
| 10 | 24 | 4 | 17 | 350 | -24 |
| 11 | 24 | 10 | 42 | 350 | -26 |
| 12 | 24 | 20 | 83 | 350 | -29 |

**Tabelle 4: Unterdrückung des von Lubricity-Additiven verursachten Antagonismus auf die Paraffindispergierung durch Amine in Testöl 2**

| Als weiteren Fließverbesserer enthielt das Testöl 210 Vol.-ppm einer Mischung aus 3.5 Gew.-Teilen D1, 1 Gew.-Teil E2 und 17 Gew.-Teilen G3 (CFI 2; Dichte@40°C = 0,90 g/cm³). Die Lagertemperatur betrug -22°C und die Lagerdauer 16 h. | | | | | | | | | | | | | | | | |
|---|---|---|---|---|---|---|---|---|---|---|---|---|---|---|---|---|
| Bsp. | A [ppm] | B [Gew.%; ppm] | C1 [ppm] | Sediment | | Cloud Point [°C] | | | ΔCPₒ | ΔCPᵤ | CFPP [°C] | | | ΔCFPPₒ | ΔCFPPᵤ | PASS |
| | | | | vis | Vol.-% | vor | oben | unten | [°C] | [°C] | vor | oben | unten | [°C] | [°C] | |
| 0(V) | A1 [54] | - | - | d | 0 | -16,7 | -16,9 | -16,4 | 0,2 | 0,3 | -38 | -37 | -37 | 1,0 | 1,0 | + |
| 1(V) | A1 [54] | - | 350 | s | 8 | -16,5 | -18,5 | -12,5 | 2,0 | 4,0 | -33 | -34 | -25 | 1,0 | 8,0 | - |
| 2 | A1 [54] | B1 [31; 17] | 350 | d | 0 | -16,7 | -16,4 | -16,7 | 0,3 | 0,0 | -37 | -35 | -35 | 2,0 | 2,0 | + |
| 3 | A1 [54] | B2 [31; 17] | 350 | d | <1 | -16,4 | -17,0 | -15,3 | 0,6 | 1,1 | -36 | -38 | -37 | 2,0 | 1,0 | + |
| 4 | A1 [54] | B4 [31; 17] | 350 | d | 0 | -16,3 | -16,8 | -15,6 | 0,5 | 0,7 | -35 | -35 | -34 | 0,0 | 1,0 | + |
| 5 | A1 [54] | B9 [31 ;17] | 350 | d | 2 | -16,2 | -17,7 | -14,5 | 1,5 | 1,7 | -33 | -35 | -31 | 2,0 | 2,0 | + |
| 6 | A1 [72] | - | - | d | 0 | -16,7 | -16,9 | -16,4 | 0,2 | 0,3 | -36 | -36 | -35 | 0,0 | 1,0 | - |
| 7 | A1 [72] | - | 350 | d | 0 | -16,5 | -18,9 | -14,1 | 2,4 | 2,1 | -34 | -34 | -21 | 0,0 | 13,0 | - |
| 8 | A2 [72] | - | 350 | d | 0 | -16,6 | -18,6 | -15,3 | 2,0 | 1,3 | -34 | -36 | -28 | 2,0 | 6,0 | - |
| 9 | A3 [72] | - | 350 | d | 2 | -16,2 | -16,4 | -14,1 | 0,2 | 2,1 | -33 | -33 | -28 | 0,0 | 5,0 | - |
| 10 | A2 [72] | B1 [21; 15] | 350 | d | 0 | -16,5 | -16,6 | -16,3 | 0,1 | 0,3 | -35 | -35 | -34 | 0,0 | 1,0 | + |
| 11 | A3 [72] | B1 [21; 15] | 350 | d | <1 | -16,3 | -16,4 | -15,6 | 0,1 | 0,7 | -35 | -34 | -33 | 1,0 | 2,0 | + |

**Tabelle 5: Unterdrückung des von Lubricity-Additiven verursachten Antagonismus auf den CFPP-Wert durch Amine in Testöl 3**

| Als Fließverbesserer enthielt das Testöl 260 Vol.-ppm einer Mischung aus 3.5 Gew.-Teilen D1, 1 Gew.-Teil E1 und 15 Gew.-Teilen G2 (CFI 3; Dichte@40°C = 0,91 g/cm³). | | | | | |
|---|---|---|---|---|---|
| Bsp. | A | B | | C | CFPP |
| | [ppm] | [ppm] | Gew.-% | [ppm] | [°C] |
| 1 (Vgl.) | A1 [24] | - | | - | -27 |
| 2 (Vgl.) | A1 [24] | B2 [7,5] | B2 [31] | - | -27 |
| 3 (Vgl.) | A1 [24] | B4 [7,5] | B4 [31] | - | -26 |
| 4 (Vgl.) | A1 [24] | B5 [7,5] | B5 [31] | - | -27 |
| 5 (Vgl.) | A1 [24] | B6 [7,5] | B6 [31] | - | -28 |
| 6 (Vgl.) | A1 [24] | B7 [7,5] | B7 [31] | - | -27 |
| 7 (Vgl.) | A1 [24] | B8 [7,5] | B8 [31] | - | -27 |
| 8 (Vgl.) | A1 [24] | - | - | C1 [200] | -13 |
| 9 | A1 [24] | B2 [7,5] | B2 [31] | C1 [200] | -27 |
| 10 | A1 [24] | B4 [7,5] | B4 [31] | C1 [200] | -26 |
| 11 | A1 [24] | B5 [7,5] | B5 [31] | C1 [200] | -27 |
| 12 | A1 [24] | B6 [7,5] | B6 [31] | C1 [200] | -27 |
| 13 | A1 [24] | B7 [7,5] | B7 [31] | C1 [200] | -26 |
| 14 | A1 [24] | B8 [7,5] | B8 [31] | C1 [200] | -26 |
| 15 (Vgl.) | A1 [24] | - | - | C1 [350] | -15 |
| 16 | A1 [24] | B1 [7,5] | B1 [31] | C1 [350] | -27 |
| 17 | A1 [24] | B5 [7,5] | B4 [31] | C1 [350] | -27 |
| 18 | A1 [24] | B6 [7,5] | B5 [31] | C1 [350] | -27 |
| 19 | A1 [24] | B4 [7,5] | B6 [31] | C1 [350] | -26 |
| 20 | A1 [24] | B7 [7,5] | B7 [31] | C1 [350] | -27 |
| 21 | A1 [24] | B8 [7,5] | B8 [31] | C1 [350] | -26 |

**Tabelle 6: Unterdrückung des von Lubricity-Additiven verursachten Antagonismus auf den CFPP-Wert durch Amine in Testöl 4.**

| Als weiteren Fließverbesserer wurde dem Testöl eine Mischung aus 3.5 Gew.-Teilen D1, 1 Gew.-Teil E1 und 17 Gew.-Teilen G4 (CFI 4; Dichte@40°C = 0,91 g/cm³) zugesetzt. | | | | | | |
|---|---|---|---|---|---|---|
| Bsp. | A [ppm] | B | | C [ppm] | CFI 4 [Vol.-ppm] | CFPP [°C] |
| | | [ppm] | [Gew.-%] | | | |
| 1 (Vgl.) | A1 [30] | - | - | - | 250 | -27 |
| 2 (Vgl.) | A1 [36] | - | - | - | 300 | -27 |
| 3 (Vgl.) | A1 [30] | B2 [9] | B2 [31] | - | 250 | -27 |
| 4 (Vgl.) | A1 [30] | B8 [9] | B8 [31] | - | 250 | -27 |
| 5 (Vgl.) | A1 [30] | - | - | C1 [200] | 250 | -23 |
| 6 (Vgl.) | A1 [36] | - | - | C1 [200] | 300 | -23 |
| 7 | A1 [30] | B2 [9] | B2 [31] | C1 [200] | 250 | -27 |
| 8 | A1 [30] | B8 [9] | B8 [31] | C1 [200] | 250 | -26 |
| 9 (Vgl.) | A1 [30] | | | C1 [350] | 250 | -22 |
| 10 (Vgl.) | A1 [36] | | | C1 [350] | 300 | -22 |
| 11 | A1 [30] | B2 [9] | B2 [31] | C1 [350] | 250 | -27 |
| 12 | A1 [30] | B8 [9] | B8 [31] | C1 [350] | 250 | -28 |

**Tabelle 7: Unterdrückung des von Lubricity-Additiven verursachten Antagonismus auf die Paraffindispergierung durch Amine in Testöl 5.**

| Als weiteren Fließverbesserer enthielt das Testöl 280 Vol.-ppm einer Mischung aus 4,0 Gew.-Teilen G1, 1 Gew.-Teil D1, 0,5 Gew.-Teilen F1 und 1 Gew.-Teil E1 (CFI 5; Dichte@40°C = 0,90 g/cm³). Die Lagertemperatur betrug -18°C, die Lagerdauer 24h. | | | | | | | | | | | | | | | | |
|---|---|---|---|---|---|---|---|---|---|---|---|---|---|---|---|---|
| Bsp. | A [ppm] | B [Gew.%; ppm] | C [ppm] | Sediment | | Cloud Point [°C] | | | ΔCPₒ | ΔCPᵤ | CFPP [°C] | | | ΔCFPPₒ | ΔCFPPᵤ | PASS |
| | | | | vis | Vol.-% | vor | oben | unten | [°C] | [°C] | vor | oben | unten | [°C] | [°C] | |
| 0(V) | A1 [36] | - | - | d | 0 | -7,9 | -8,1 | -7,6 | 0,2 | 0,3 | -25 | -26 | -25 | 1,0 | 0,0 | + |
| 1(V) | A1 [36] | - | C1 [350] | s | 4 | -7,7 | -9,3 | -5,5 | 1,6 | 2,2 | -22 | -22 | -18 | 0,0 | 4,0 | - |
| 2(V) | A1 [36] | - | C2 [350] | s | 9 | -7,9 | -9,5 | -5,3 | 1,6 | 2,6 | -23 | -22 | -18 | 1,0 | 5,0 | - |
| 3(V) | A1 [36] | - | C3 [350] | s | 7 | -7,8 | -9,6 | -5,5 | 1,8 | 2,3 | -22 | -21 | -18 | 1,0 | 4,0 | - |
| 4 | A1 [36] | B1 [31; 9] | C1 [350] | d | 0 | -7,9 | -7,9 | -7,6 | 0,0 | 0,3 | -26 | -25 | -25 | 1,0 | 1,0 | + |
| 5 | A1 [36] | B1 [31; 9] | C2 [350] | d | >1 | -7,8 | -7,9 | -7,5 | 0,1 | 0,3 | -25 | -25 | -24 | 0,0 | 1,0 | + |
| 6 | A1 [36] | B1 [31; 9] | C3 [350] | d | 0 | -7,7 | -7,9 | -7,6 | 0,2 | 0,1 | -25 | -26 | -24 | 1,0 | 1,0 | + |
| 7 | A2 [36] | B8 [31; 9] | C1 [350] | d | <1 | -7,8 | -8,1 | -7,5 | 0,3 | 0,3 | -26 | -25 | -25 | 1,0 | 1,0 | + |
| 8 | A2 [36] | B8 [31; 9] | C2 [350] | d | 0 | -7,7 | -8,2 | -7,3 | 0,5 | 0,4 | -25 | -26 | 24 | 1,0 | 1,0 | + |
| 9 | A2 [36] | B8 [31; 9] | C3 [350] | d | 2 | -7,8 | -8,2 | -7,5 | 0,4 | 0,3 | -26 | -24 | -24 | 2,0 | 2,0 | + |

**Tabelle 8: Unterdrückung des von Lubricity-Additiven verursachten Antagonismus auf die Paraffindispergierung durch Amine in Testöl 6**

| Als weiteren Fließverbesserer enthielt das Testöl 320 ppm einer Mischung aus 3,5 Gew.-Teilen G3, 1 Gew.-Teil D2, 1 Gew.-Teil F2 und 1 Gew.-Teil E1 (CFI 6; Dichte@40°C = 0,90 g/cm³). Die Lagertemperatur betrug -18°C und die Lagerdauer 24h. | | | | | | | | | | | | | | | | |
|---|---|---|---|---|---|---|---|---|---|---|---|---|---|---|---|---|
| Bsp. | A [ppm] | B [Gew.%; ppm] | C [ppm] | Sediment | | Cloud Point [°C] | | | ΔCPₒ [°C] | ΔCPᵤ [°C] | CFPP [°C] | | | ΔCFPPₒ [°C] | ΔCFPPᵤ [°C] | PASS |
| | | | | vis. | Vol.-% | vor | oben | unten | | | vor | oben | unten | | | |
| 0(V) | A1 [48] | - | - | d | 0 | -8,0 | -7,6 | -8,2 | 0,4 | 0,2 | -25 | -26 | -25 | 1 | 0 | + |
| 1(V) | A1 [48] | - | C1 [300] | s | 8 | -7,7 | -5,1 | -5,3 | 2,6 | 2,4 | -21 | -23 | -18 | 4 | 3 | - |
| 2(V) | A1 [48] | - | C2 [300] | s | 9 | -7,6 | -5,2 | -3,5 | 2,4 | 4,1 | -20 | -22 | -17 | 2 | 3 | - |
| 3(V) | A1 [48] | - | C3 [300] | s | 7 | -7,5 | -4,4 | -1,8 | 3,1 | 5,8 | -22 | -18 | -16 | 4 | 6 | - |
| 4(V) | A1 [48] | - | C4 [300] | s | 10 | -7,9 | -5,2 | -4,8 | 2,7 | 3,1 | -23 | -20 | -21 | 3 | 1 | - |
| 5 | A1 [48] | B1 [50; 24] | C1 [300] | d | 0 | -7,9 | -8,0 | -7,9 | 0,1 | 0,0 | -25 | -24 | -26 | 1 | 1 | + |
| 6 | A1 [48] | B1 [50; 24] | C2 [300] | d | >1 | -8,0 | -8,3 | -7,4 | 0,7 | 0,6 | -26 | -26 | -25 | 0 | 1 | + |
| 7 | A1 [48] | B1 [50; 24] | C3 [300] | d | 0 | -7,8 | -8,1 | -8,0 | 0,3 | 0,2 | -27 | -26 | -27 | 1 | 0 | + |
| 8 | A1 [48] | B1 [50; 24] | C4 [300] | d | 1 | -7,9 | -8,1 | -7,5 | 0,2 | 0,4 | -26 | -25 | -26 | 1 | 0 | + |
| 9 | A1 [48] | B3 [50; 24] | C4 [300] | d | 1 | -8,0 | -8,5 | -7,3 | 0,5 | 0,7 | -25 | -25 | -24 | 0 | 1 | + |

**Tabelle 9: Unterdrückung des von Lubricity-Additiven verursachten Antagonismus auf den CFPP-Wert durch Amine und Harze in Testöl 7.**

| Als weiteren Fließverbesserer enthielt das Testöl 7 eine Mischung aus 1.5 Gew.-Teil E1 und 17 Gew.-Teilen G4 (CFI 7; Dichte@40°C = 0,90 g/cm³). | | | | | | |
|---|---|---|---|---|---|---|
| | A [ppm] | B [Gew.-%; ppm] | C [ppm] | D [ppm] | CFI 7 [Vol.-ppm] | CFPP [°C] |
| 1 (V) | A1 [48] | - | - | - | 230 | -20 |
| 2 (V) | A1 [48] | - | - | D1 [50] | 230 | -23 |
| 3 (V) | A1 [48] | - | C1 [300] | - | 230 | -15 |
| 4 (V) | A1 [48] | - | C1 [300] | D1 [50] | 230 | -18 |
| 5 (V) | A1 [48] | B1 [50; 24] | C1 [300] | - | 230 | -19 |
| 6 (V) | A1 [48] | B1 [50; 24] | C1 [300] | D1 [50] | 230 | -24 |
| 7(V) | A2 [48] | - | - | - | 230 | -19 |
| 8(V) | A2 [48] | - | - | D2 [50] | 230 | -22 |
| 9 (V) | A2 [48] | - | C2 [300] | - | 230 | -15 |
| 10 (V) | A2 [48] | - | C2 [300] | D2 [50] | 230 | -17 |
| 11 (V) | A2 [48] | B1 [50; 24] | C2 [300] | - | 230 | -19 |
| 12 (V) | A2 [48] | B1 [50; 24] | C2 [300] | D2 [50 | 230 | -22 |

Die Versuche der Tabelle 9 zeigen, dass dem vom Lubricity-Additiv (C) verursachten antagonistischen Effekt auf die vom Amid-Ammoniumsalz (A) in Kombination mit den weiteren Fließverbesserern erreichte Verbesserung der Kälteeigenschaften sowohl durch Zugabe eines Amins (A) als auch durch Zugabe eines Harzes (D) entgegengewirkt werden kann. Erst durch Zugabe von Amin (A) und Harz (D) kann der antagonistische Effekt überwunden werden.

## Patentansprüche

1. Verwendung eines Kälteadditivs, enthaltend
i) mindestens ein öllösliches Amid-Ammoniumsalz einer Polycarbonsäure mit einem Mono- und/oder Dialkylamin (A) und
ii) 5 - 100 Gew.-% bezogen auf die Menge an Amid-Ammoniumsalz (A) eines öllöslichen Amins (B), und
iii) 0,1 bis 10 Gewichtsteile bezogen auf die Menge an Amid-Ammoniumsalz (A) eines Harzes aus mindestens einer einen Alkylrest tragenden aromatischen Verbindung und einem Aldehyd und/oder Keton (D)
zur Verbesserung der Kälteeigenschaften eines Brennstofföls mit einem Schwefelgehalt von weniger als 50 ppm, das ein Lubricity-Additiv (C) enthält, wobei das Lubricity-Additiv (C)
eine Fettsäure,
das Oligomere einer ungesättigten Fettsäure,
eine Alk(en)ylbernsteinsäure,
einen Partialester eines Polyols mit einer Fettsäure,
einen Partialester eines Polyols mit einem Oligomeren einer ungesättigten Fettsäure,
einen Partialester eines Polyols mit einer Alk(en)ylbernsteinsäure,
ein Fettsäureamid eines Alkanolamins oder
eine Mischung aus zwei oder mehreren dieser Verbindungen enthält.

2. Verwendung eines öllöslichen Amins (B) zur Verbesserung der Kälteeigenschaften eines schwefelarmen Brennstofföls mit einem Schwefelgehalt von weniger als 50 ppm, das
i) mindestens ein öllösliches Amid-Ammoniumsalz einer Polycarbonsäure mit einem Mono- und/oder Dialkylamin (A),
ii) ein Lubricity-Additiv (C), und
iii) ein Harz aus mindestens einer einen Alkylrest tragenden aromatischen Verbindung und einem Aldehyd und/oder Keton (D) enthält,
worin die Menge des öllöslichen Amins (B) 5 - 100 Gew.-% bezogen auf die Menge an Amid-Ammoniumsalz (A) beträgt, worin das Lubricity-Additiv (C) ausgewählt ist aus Fettsäuren, Oligomeren ungesättigter Fettsäuren, Alk(en)ylbernsteinsäuren, Partialestern von Polyolen mit Fettsäuren, Oligomeren ungesättigter Fettsäuren und/oder Alk(en)ylbernsteinsäuren, Fettsäureamiden von Alkanolaminen sowie deren Mischungen.

3. Verwendung gemäß Anspruch 1 oder 2, worin das Lubricity-Additiv (C) eine Fettsäure ist.

4. Verwendung gemäß einem oder mehreren der Ansprüche 1 bis 3, worin 15 bis 70 und bevorzugt 20 bis 50 Gew.-% öllösliches Amin (B) bezogen auf das Amid-Ammoniumsalz (A) zugesetzt werden.

5. Verfahren zur Verbesserung der Kälteeigenschaften eines Brennstofföls mit einem Schwefelgehalt von weniger als 50 ppm, das ein Lubricity-Additiv (C) und ein Harz aus mindestens einer einen Alkylrest tragenden aromatischen Verbindung und einem Aldehyd und/oder Keton (D) enthält, indem dem Brennstofföl ein Kälteadditiv zugesetzt wird, und worin das Kälteadditiv
i) mindestens ein öllösliches Amid-Ammoniumsalz einer Polycarbonsäure mit einem Mono- und/oder Dialkylamin (A) und
ii) 5 - 100 Gew.-% bezogen auf die Menge an Amid-Ammoniumsalz (A) eines öllöslichen Amins (B), und
iii) 0,1 bis 10 Gewichtsteile bezogen auf die Menge an Amid-Ammoniumsalz (A) eines Harzes aus mindestens einer einen Alkylrest tragenden
aromatischen Verbindung und einem Aldehyd und/oder Keton (D) enthält, wobei das Brennstofföl zwischen 50 und 1.000 ppm eines Lubricity-Additivs (C), ausgewählt aus Fettsäuren, Oligomeren ungesättigter Fettsäuren, Alk(en)ylbernsteinsäuren, Partialestern von Polyolen mit Fettsäuren, Oligomeren ungesättigter Fettsäuren, Alk(en)ylbernsteinsäuren, Fettsäureamiden von Alkanolaminen und deren Mischungen enthält.

6. Verfahren gemäß Anspruch 5, worin das Lubricity-Additiv (C) eine Fettsäure ist.

7. Brennstofföle mit einem Schwefelgehalt von weniger als 50 ppm, enthaltend ein Lubricity-Additiv (C) und ein Kälteadditiv, worin das Kälteadditiv
i) mindestens ein öllösliches Amid-Ammoniumsalz einer Polycarbonsäure mit einem Mono- und/oder Dialkylamin (A) und
ii) 5 - 100 Gew.-% bezogen auf die Menge an Amid-Ammoniumsalz (A) eines öllöslichen Amins (B), und
iii) 0,1 bis 10 Gewichtsteile bezogen auf die Menge an Amid-Ammoniumsalz (A) eines Harzes aus mindestens einer einen Alkylrest tragenden aromatischen Verbindung und einem Aldehyd und/oder Keton (D) enthält, und worin das Lubricity-Additiv (C) ausgewählt ist aus Fettsäuren, Oligomeren ungesättigter Fettsäuren, Alk(en)ylbernsteinsäuren, Partialestern von Polyolen mit Fettsäuren, Oligomeren ungesättigter Fettsäuren und/oder Alk(en)ylbernsteinsäuren, Fettsäureamiden von Alkanolaminen sowie deren Mischungen.

8. Verwendung, Verfahren oder Brennstofföl nach einem oder mehreren der Ansprüche 1 bis 7, wobei die Polycarbonsäure ausgewählt ist aus monomeren Dicarbonsäuren, monomeren Polycarbonsäuren und copolymerisierten Dicarbonsäuren.

9. Verwendung, Verfahren oder Brennstofföl nach einem oder mehreren der Ansprüche 1 bis 8 wobei das Kälteadditiv 1 bis 95 Gew.-% an Amid-Ammoniumsalz (A) enthält.

10. Verwendung, Verfahren oder Brennstofföl nach einem oder mehreren der Ansprüche 1 bis 9, wobei das öllösliche Amin (B) die Formel (1) 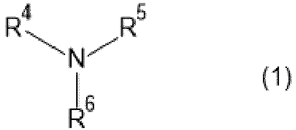 hat, worin
R⁴ für einen Alkylrest mit 8 bis 22 C-Atomen oder eine Gruppe der Formel -(CH₂)ₙ-[NR⁷-(CH₂)ₙ]ₘ-NH₂,
R⁵ für Wasserstoff, einen Alkylrest mit 1 bis 22 C-Atomen oder eine Gruppe der Formel -(CH₂)ₙ-[NR⁷-(CH₂)ₙ]ₘ-NH₂,
R⁶ für Wasserstoff oder einen Alkylrest mit 1 bis 22 C-Atomen,
R⁷ für Wasserstoff oder einen Alkylrest mit 1 bis 22 C-Atomen,
n für 2 oder 3 und
m für 0 bis 10 steht.

11. Verwendung, Verfahren oder Brennstofföl nach einem oder mehreren der Ansprüche 1 bis 10, wobei das Kälteadditiv 15 bis 70 und bevorzugt 20 bis 50 Gew.-% öllösliches Amin (B) bezogen auf die Menge an Amid-Ammoniumsalz (A) enthält.

12. Verwendung, Verfahren oder Brennstofföl nach einem oder mehreren der Ansprüche 1 bis 11, wobei das öllösliche Amin (B) ein primäres, sekundäres oder tertiäres Fettamin ist.

13. Verwendung, Verfahren oder Brennstofföl nach einem oder mehreren der Ansprüche 10 bis 12, worin in Formel (1)
R⁴ für einen Alkylrest mit 8 bis 22 C-Atomen,
R⁵ für Wasserstoff oder einen Alkylrest mit 1 bis 22 C-Atomen und
R⁶ für Wasserstoff oder einen Alkylrest mit 1 bis 22 C-Atomen steht.

14. Verwendung, Verfahren oder Brennstofföl nach einem oder mehreren der Ansprüche 1 bis 13, wobei das öllösliche Amin (B) mindestens einen Alkylrest mit 10 bis 22 C-Atomen besitzt.

15. Verwendung, Verfahren oder Brennstofföl nach einem oder mehreren der Ansprüche 1 bis 14, wobei das öllösliche Amin ein Polyamin ist.

16. Verwendung, Verfahren oder Brennstofföl nach einem oder mehreren der Ansprüche 1 bis 15, wobei der Bestandteil iii) ein Alkylphenolharz oder ein Hydroxybenzoesäureesterharz ist.

17. Verwendung, Verfahren oder Brennstofföl nach einem oder mehreren der Ansprüche 1 bis 16, wobei das Kälteadditiv zusätzlich eine Polyoxyalkylenverbindung (E) enthält.

18. Verwendung, Verfahren oder Brennstofföl nach einem oder mehreren der Ansprüche 1 bis 17, wobei das Kälteadditiv zusätzlich ein Kammpolymer (F) enthält.

19. Verwendung, Verfahren oder Brennstofföl nach einem oder mehreren der Ansprüche 1 bis 18, wobei das Kälteadditiv zusätzlich ein Ethylen-Copolymer (G) enthält.

20. Brennstofföl gemäß Anspruch 7, worin der Schwefelgehalt des Brennstofföls weniger als 20 ppm und speziell weniger als 10 ppm beträgt.

21. Brennstofföl gemäß Anspruch 7 und/oder 20, wobei das Brennstofföl 50 bis 1.500 ppm (m/m), bevorzugt 100 bis 1.000 ppm (m/m) und insbesondere 200 bis 800 ppm (m/m) des Kälteadditivs (A) enthält.

22. Brennstofföl gemäß einem oder mehreren der Ansprüche 7 oder 20 - 22, wobei das Brennstofföl mineralischen Ursprungs ist.

23. Brennstofföl gemäß einem oder mehreren der Ansprüche 7 oder 20 - 22, wobei das Brennstofföl synthetischen Kraftstoff enthält oder aus diesem besteht.

24. Brennstofföl gemäß einem oder mehreren der Ansprüche 7 oder 20 - 23, wobei das Brennstofföl ein Mitteldestillat ist.

25. Brennstofföl gemäß einem oder mehreren der Ansprüche 7 oder 20 - 24, wobei das Brennstofföl Diesel oder Heizöl ist.

## Claims

1. Use of a low-temperature additive comprising
i) at least one oil-soluble amide-ammonium salt of a polycarboxylic acid with a mono- and/or dialkylamine (A) and
ii) 5-100% by weight, based on the amount of amide-ammonium salt (A), of an oil-soluble amine (B), and
iii) 0.1 to 10 parts by weight, based on the amount of amide-ammonium salt (A), of a resin formed from at least one aromatic compound bearing an alkyl radical and an aldehyde and/or ketone (D)
for improving the low-temperature properties of a fuel oil having a sulfur content of less than 50 ppm, comprising a lubricity additive (C), wherein the lubricity additive (C) comprises
a fatty acid,
the oligomer of an unsaturated fatty acid,
an alk(en)ylsuccinic acid,
a partial ester of a polyol with a fatty acid,
a partial ester of a polyol with an oligomer of an unsaturated fatty acid,
a partial ester of a polyol with an alk(en)ylsuccinic acid,
a fatty acid amide of an alkanolamine or
a mixture of two or more of these compounds.

2. Use of an oil-soluble amine (B) for improving the low-temperature properties of a low-sulfur fuel oil having a sulfur content of less than 50 ppm, comprising
i) at least one oil-soluble amide-ammonium salt of a polycarboxylic acid with a mono- and/or dialkylamine (A),
ii) a lubricity additive (C), and
iii) a resin formed from at least one aromatic compound bearing an alkyl radical and an aldehyde and/or ketone (D),
in which the amount of the oil-soluble amine (B) is 5-100% by weight based on the amount of amide-ammonium salt (A), in which the lubricity additive (C) is selected from fatty acids, oligomers of unsaturated fatty acids, alk(en)ylsuccinic acids, partial esters of polyols with fatty acids, oligomers of unsaturated fatty acids and/or alk(en)ylsuccinic acids, fatty acid amides of alkanolamines, and mixtures thereof.

3. Use according to Claim 1 or 2, in which the lubricity additive (C) is a fatty acid.

4. Use according to one or more of Claims 1 to 3, in which 15% to 70% and preferably 20% to 50% by weight of oil-soluble amine (B) based on the amide-ammonium salt (A) is added.

5. Method of improving the low-temperature properties of a fuel oil having a sulfur content of less than 50 ppm, comprising a lubricity additive (C) and a resin formed from at least one aromatic compound bearing an alkyl radical and an aldehyde and/or ketone (D), by adding a low-temperature additive to the fuel oil, and in which the low-temperature additive comprises
i) at least one oil-soluble amide-ammonium salt of a polycarboxylic acid with a mono- and/or dialkylamine (A) and
ii) 5-100% by weight, based on the amount of amide-ammonium salt (A), of an oil-soluble amine (B), and
iii) 0.1 to 10 parts by weight, based on the amount of amide-ammonium salt (A), of a resin formed from at least one aromatic compound bearing an alkyl radical and an aldehyde and/or ketone (D,
wherein the fuel oil contains between 50 and 1000 ppm of a lubricity additive (C) selected from fatty acids, oligomers of unsaturated fatty acids, alk(en)ylsuccinic acids, partial esters of polyols with fatty acids, oligomers of unsaturated fatty acids, alk(en)ylsuccinic acids, fatty acid amides of alkanolamines and mixtures thereof.

6. Method according to Claim 5, in which the lubricity additive (C) is a fatty acid.

7. Fuel oil having a sulfur content of less than 50 ppm, comprising a lubricity additive (C) and a low-temperature additive, in which the low-temperature additive comprises
i) at least one oil-soluble amide-ammonium salt of a polycarboxylic acid with a mono- and/or dialkylamine (A) and
ii) 5-100% by weight, based on the amount of amide-ammonium salt (A), of an oil-soluble amine (B), and
iii) 0.1 to 10 parts by weight, based on the amount of amide-ammonium salt (A), of a resin formed from at least one aromatic compound bearing an alkyl radical and an aldehyde and/or ketone (D), and in which the lubricity additive (C) is selected from fatty acids, oligomers of unsaturated fatty acids, alk(en)ylsuccinic acids, partial esters of polyols with fatty acids, oligomers of unsaturated fatty acids and/or alk(en)ylsuccinic acids, fatty acid amides of alkanolamines, and mixtures thereof.

8. Use, method or fuel oil according to one or more of Claims 1 to 7, wherein the polycarboxylic acid is selected from monomeric dicarboxylic acids, monomeric polycarboxylic acids and copolymerized dicarboxylic acids.

9. Use, method or fuel oil according to one or more of Claims 1 to 8, wherein the low-temperature additive contains 1% to 95% by weight of amide-ammonium salt (A).

10. Use, method or fuel oil according to one or more of Claims 1 to 9, wherein the oil-soluble amine (B) has the formula (1) 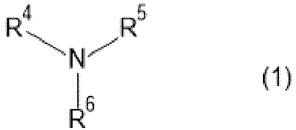 in which
R⁴ is an alkyl radical having 8 to 22 carbon atoms or a group of the formula -(CH₂)ₙ-[NR⁷-(CH₂)ₙ]ₘ-NH₂,
R⁵ is hydrogen, an alkyl radical having 1 to 22 carbon atoms or a group of the formula -(CH₂)ₙ-[NR⁷-(CH₂)ₙ]ₘ-NH₂,
R⁶ is hydrogen or an alkyl radical having 1 to 22 carbon atoms,
R⁷ is hydrogen or an alkyl radical having 1 to 22 carbon atoms,
n is 2 or 3 and
m is 0 to 10.

11. Use, method or fuel oil according to one or more of Claims 1 to 10, wherein the low-temperature additive contains 15% to 70% and preferably 20% to 50% by weight of oil-soluble amine (B) based on the amount of amide-ammonium salt (A).

12. Use, method or fuel oil according to one or more of Claims 1 to 11, wherein the oil-soluble amine (B) is a primary, secondary or tertiary fatty amine.

13. Use, method or fuel oil according to one or more of Claims 10 to 12, in which, in formula (1),
R⁴ is an alkyl radical having 8 to 22 carbon atoms,
R⁵ is hydrogen or an alkyl radical having 1 to 22 carbon atoms and
R⁶ is hydrogen or an alkyl radical having 1 to 22 carbon atoms.

14. Use, method or fuel oil according to one or more of Claims 1 to 13, wherein the oil-soluble amine (B) has at least one alkyl radical having 10 to 22 carbon atoms.

15. Use, method or fuel oil according to one or more of Claims 1 to 14, wherein the oil-soluble amine is a polyamine.

16. Use, method or fuel oil according to one or more of Claims 1 to 15, wherein constituent iii) is an alkylphenol resin or a hydroxybenzoate resin.

17. Use, method or fuel oil according to one or more of Claims 1 to 16, wherein the low-temperature additive additionally comprises a polyoxyalkylene compound (E).

18. Use, method or fuel oil according to one or more of Claims 1 to 17, wherein the low-temperature additive additionally comprises a comb polymer (F).

19. Use, method or fuel oil according to one or more of Claims 1 to 18, wherein the low-temperature additive additionally comprises an ethylene copolymer (G).

20. Fuel oil according to Claim 7, in which the sulfur content of the fuel oil is less than 20 ppm and especially less than 10 ppm.

21. Fuel oil according to Claim 7 and/or 20, wherein the fuel oil contains 50 to 1500 ppm (m/m), preferably 100 to 1000 ppm (m/m) and especially 200 to 800 ppm (m/m) of the low-temperature additive (A).

22. Fuel oil according to one or more of Claims 7 or 20-22, wherein the fuel oil is of mineral origin.

23. Fuel oil according to one or more of Claims 7 or 20-22, wherein the fuel oil comprises or consists of synthetic fuel.

24. Fuel oil according to one or more of Claims 7 or 20-23, wherein the fuel oil is a middle distillate.

25. Fuel oil according to one or more of Claims 7 or 20-24, wherein the fuel oil is diesel oil or heating oil.

## Revendications

1. Utilisation d'un additif améliorant les propriétés à froid, contenant
i) au moins un sel d'amide-ammonium soluble dans une huile d'un acide polycarboxylique et d'une mono- et/ou une dialkylamine (A) et
ii) 5 à 100 % en poids, par rapport à la quantité du sel d'amide-ammonium (A), d'une amine (B) soluble dans une huile, et
iii) 0,1 à 10 parties en poids, par rapport à la quantité du sel d'amide-ammonium (A), d'une résine d'au moins un composé aromatique portant un radical alkyle et d'un aldéhyde et/ou d'une cétone (D)
pour améliorer les propriétés à froid d'un fioul ayant une teneur en soufre inférieure à 50 ppm, qui contient un additif d'onctuosité (C), l'additif d'onctuosité (C) contenant
un acide gras,
l'oligomère d'un acide gras insaturé,
un acide alkyl(alcényl)succinique,
un ester partiel d'un polyol et d'un acide gras,
un ester partiel d'un polyol et d'un oligomère d'un acide gras insaturé,
un ester partiel d'un polyol et d'un acide alkyl(alcényl)succinique,
un amide d'acide gras d'une alcanolamine ou
un mélange de deux de ces composés, ou plus.

2. Utilisation d'une amine (B) soluble dans une huile pour améliorer les propriétés à froid d'un fioul à faible teneur en soufre, ayant une teneur en soufre inférieure à 50 ppm, qui contient
i) au moins un sel d'amide-ammonium soluble dans une huile d'un acide polycarboxylique et d'une mono- et/ou d'une dialkylamine (A),
ii) un additif d'onctuosité (C), et
iii) une résine d'au moins un composé aromatique portant un radical alkyle et d'un aldéhyde et/ou d'une cétone (D),
la quantité de l'amine (B) soluble dans une huile étant de 5 à 100 % en poids par rapport à la quantité du sel d'amide-ammonium (A), l'additif d'onctuosité (C) étant choisi parmi les acides gras, les oligomères d'acides gras, les acides alkyl(alcényl)succiniques, les esters partiels de polyols et d'acides gras, d'oligomères d'acides gras insaturés et/ou d'acides alkyl(alcényl)succiniques, les amides d'acides gras d'alcanolamines, ainsi que leurs mélanges.

3. Utilisation selon la revendication 1 ou 2, l'additif d'onctuosité (C) étant un acide gras.

4. Utilisation selon l'une ou plusieurs des revendications 1 à 3, pour laquelle 15 à 70 et de préférence 20 à 50 % en poids de l'amine (B) soluble dans une huile, par rapport au sel d'amide-ammonium (A), sont ajoutés.

5. Procédé pour améliorer les propriétés à froid d'un fioul ayant une teneur en soufre inférieure à 50 ppm, qui contient un additif d'onctuosité (C) et une résine d'au moins un composé aromatique portant un radical alkyle et d'un aldéhyde et/ou d'une cétone (D), dans lequel on ajoute au fioul un additif améliorant les propriétés à froid, et dans lequel l'additif améliorant les propriétés à froid contient
i) au moins un sel d'amide-ammonium soluble dans une huile d'un acide polycarboxylique et d'une mono- et/ou d'une dialkylamine (A) et
ii) 5 à 100 % en poids, par rapport à la quantité du sel d'amide-ammonium (A), d'une amine (B) soluble dans une huile, et
iii) 0,1 à 10 parties en poids, par rapport à la quantité du sel d'amide-ammonium (A), d'une résine d'au moins un composé aromatique portant un radical alkyle et d'un aldéhyde et/ou d'une cétone (D)
dans lequel le fioul contient entre 50 et 1 000 ppm d'un additif d'onctuosité (C) choisis parmi les acides gras, les oligomères d'acides gras insaturés, les acides alkyl(alcényl)succiniques, les esters partiels de polyols et d'acides gras, d'oligomères d'acides gras insaturés, d'acides alkyl(alcényl)succiniques, les amides d'acides gras d'alcanolamines et leurs mélanges.

6. Procédé selon la revendication 5, dans lequel l'additif d'onctuosité (C) est un acide gras.

7. Fiouls ayant une teneur en soufre inférieure à 50 ppm, contenant un additif d'onctuosité (C) et un additif améliorant les propriétés à froid, l'additif améliorant les propriétés à froid contenant
i) au moins un sel d'amide-ammonium soluble dans une huile d'un acide polycarboxylique et d'une mono- et/ou d'une dialkylamine (A) et
ii) 5 à 100 % en poids, par rapport à la quantité du sel d'amide-ammonium (A), d'une amine (B) soluble dans une huile, et
iii) 0,1 à 10 parties en poids, par rapport à la quantité du sel d'amide-ammonium (A), d'une résine d'au moins un composé aromatique portant un radical alkyle et d'un aldéhyde et/ou d'une cétone (D),
et dans lequel l'additif d'onctuosité (C) est choisi parmi les acides gras, les oligomères d'acides gras insaturés, les acides alkyl(alcényl)succiniques, les esters partiels de polyols et d'acides gras, d'oligomères d'acides gras insaturés et/ou d'acides alkyl(alcényl)succiniques, les amides d'acides gras d'alcanolamines, ainsi que leurs mélanges.

8. Utilisation, procédé ou fioul selon l'une ou plusieurs des revendications 1 à 7, l'acide polycarboxylique étant choisi parmi les acides dicarboxyliques monomères, les acides polycarboxyliques monomères et les acides dicarboxyliques copolymérisés.

9. Utilisation, procédé ou fioul selon l'une ou plusieurs des revendications 1 à 8, l'additif améliorant les propriétés à froid contenant 1 à 95 % en poids du sel d'amide ammonium (A).

10. Utilisation, procédé ou fioul selon l'une ou plusieurs des revendications 1 à 9, l'amine (B) soluble dans une huile ayant la formule (1) 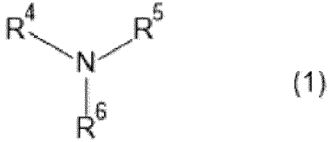 dans laquelle
R⁴ représente un radical alkyle ayant 8 à 22 atomes de carbone ou un groupe de formule -(CH₂)ₙ-[NR⁷-(CH₂)ₙ]ₘ-NH₂,
R⁵ représente un hydrogène, un radical alkyle ayant 1 à 22 atomes de carbone ou un groupe de formule-(CH₂)ₙ-[NR⁷-(CH₂)ₙ]ₘ-NH₂,
R⁶ représente un hydrogène ou un radical alkyle ayant 1 à 22 atomes de carbone,
R⁷ représente un hydrogène ou un radical alkyle ayant 1 à 22 atomes de carbone,
n représente 2 ou 3 et
m représente 0 à 10.

11. Utilisation, procédé ou fioul selon l'une ou plusieurs des revendications 1 à 10, l'additif améliorant les propriétés à froid contenant 15 à 70 et de préférence 20 à 50 % en poids de l'amine (B) soluble dans une huile, par rapport à la quantité du sel d'amide-ammonium (A).

12. Utilisation, procédé ou fioul selon l'une ou plusieurs des revendications 1 à 11, l'amine (B) soluble dans une huile étant une amine grasse primaire, secondaire ou tertiaire.

13. Utilisation, procédé ou fioul selon l'une ou plusieurs des revendications 10 à 12, pour laquelle, dans la formule (1)
R⁴ représente un radical alkyle ayant 8 à 22 atomes de carbone,
R⁵ représente un hydrogène ou un radical alkyle ayant 1 à 22 atomes de carbone et
R⁶ représente un hydrogène ou un radical alkyle ayant 1 à 22 atomes de carbone.

14. Utilisation, procédé ou fioul selon l'une ou plusieurs des revendications 1 à 13, l'amine (B) soluble dans une huile comportant au moins un radical alkyle ayant 10 à 22 atomes de carbone.

15. Utilisation, procédé ou fioul selon l'une ou plusieurs des revendications 1 à 14, l'amine soluble dans une huile étant une polyamine.

16. Utilisation, procédé ou fioul selon l'une ou plusieurs des revendications 1 à 15, le constituant iii) étant une résine d'alkylphénol ou une résine d'ester d'acide hydroxybenzoïque.

17. Utilisation, procédé ou fioul selon l'une ou plusieurs des revendications 1 à 16, l'additif améliorant les propriétés à froid contenant en outre un composé polyoxyalkyléné (E).

18. Utilisation, procédé ou fioul selon l'une ou plusieurs des revendications 1 à 17, l'additif améliorant les propriétés à froid contenant en outre un polymère en peigne (F).

19. Utilisation, procédé ou fioul selon l'une ou plusieurs des revendications 1 à 18, l'additif améliorant les propriétés à froid contenant en outre un copolymère de l'éthylène (G).

20. Fioul selon la revendication 7, la teneur en soufre du fioul étant inférieure à 20 ppm et spécialement inférieure à 10 ppm.

21. Fioul selon la revendication 7 et/ou 20, le fioul contenant 50 à 1 500 ppm (m/m), de préférence 100 à 1 000 ppm (m/m) et en particulier 200 à 800 ppm (m/m) de l'additif améliorant les propriétés à froid (A).

22. Fioul selon l'une ou plusieurs des revendications 7 ou 20 à 22, le fioul étant d'origine minérale.

23. Fioul selon l'une ou plusieurs des revendications 7 ou 20 à 22, le fioul contenant un carburant synthétique ou en étant constitué.

24. Fioul selon l'une ou plusieurs des revendications 7 ou 20 à 23, le fioul étant un distillat moyen.

25. Fioul selon l'une ou plusieurs des revendications 7 ou 20 à 24, le fioul étant un combustible diesel ou un mazout.
